# EUROPEAN PATENT APPLICATION

(11) **EP 2 919 167 A2**
(43) Date of publication of application: **16.09.2015**
(21) Application number: 15155896.2
(22) Date of filing: 20.02.2015
(51) Int. Cl.: G06K 9/68

(54) **Image processing device, image processing method, and image processing program**

(30) Priority: 14.03.2014 JP 2014051090
(71) Applicant: OMRON CORPORATION, Kyoto, Kyoto 600-8530 (JP)
(72) Inventor: Kawabata, Erina, Kyoto, Kyoto 600-8530 (JP); Ikeda, Yasuyuki, Kyoto, Kyoto 600-8530 (JP)
(74) Representative: Horn Kleimann Waitzhofer Patentanwälte PartG mbB

(57) **Abstract**

There has been desired an adjusting method by which a user can properly execute matching processing based on a registered template, even when the user has little experience and knowledge. An image processing device (100) includes: a matching processing unit (170) that performs matching processing on an input image based on one or a plurality of preregistered templates; an interaction unit (152, 154, 156) that outputs a result indicating a range of each region extracted from the input image assuming that the region matches one of the templates, and that receives from a user an input regarding whether an extraction result of each region is proper; and a control unit (158) that executes optimization processing of a parameter to be used for the matching processing when there has been an input that the extraction result is not proper, and that executes update processing of the template according to success or failure of the matching result of each extracted region when there has been an input that the extraction result is proper.

## Description

### FIELD

The present invention relates to an image processing device, an image processing method, and an image processing program capable of properly performing matching processing on an input image based on one or a plurality of preregistered templates.

### BACKGROUND

In an FA (Factory Automation) field, various kinds of image processing techniques have been applied. For example, by using an input image obtained by capturing an image of a workpiece and the like, there have been executed processing of measuring a size and a position of the workpiece, and processing of searching for a position or a region that matches a preregistered template. According to such an image processing, experience is necessary for registering a template, setting an imaging condition, setting various kinds of parameters, and the like. Therefore, in many cases, a user having little knowledge has difficulty in performing a proper setting. Accordingly, techniques for supporting the user have been proposed, as disclosed in Unexamined Japanese Patent Publication No. 2011-076517, Unexamined Japanese Patent Publication No. 2011-076519, and Unexamined Japanese Patent Publication No. H10-021393.

Unexamined Japanese Patent Publication No. 2011-076517 discloses an optical information reading device having a teaching function, the device in which an imaging condition can be easily set to be flexibly suited for a user usage.

Unexamined Japanese Patent Publication No. 2011-076519 discloses a setting method of an optical information reading device capable of setting an imaging condition using a teaching history being held.

Unexamined Japanese Patent Publication No. H10-021393 discloses an image processing device and the like that adopt what a system can automatically perform in a recognition trial mode. The image processing device minimizes an operator's decision. Despite a plurality of samples having been presented, the image processing device can optimize the recognition by an operation as simple as or simpler than that of a conventional operation.

According to the optical information reading device described in Unexamined Japanese Patent Publication No. 2011-076517, the user selects a teaching table. By changing a certain parameter with priority, an imaging condition is changed. The imaging condition is determined, by performing imaging a plurality of times. Unexamined Japanese Patent Publication No. 2011-076517 does not give clear description about how to change the imaging condition. In order to determine the imaging condition, certain levels of man-hour and experience are considered necessary.

According to the optical information reading device described in Unexamined Japanese Patent Publication No. 2011-076519, the user determines an optimum parameter by setting a new imaging condition by using a plurality of teaching histories. According to the method described in Unexamined Japanese Patent Publication No. 2011-076519, only the parameter is adjusted. However, in reality, it is considered not possible to obtain sufficient accuracy in many cases with the parameter adjustment only.

According to the image processing device described in Unexamined Japanese Patent Publication No. H10-021393, an optimum parameter is determined by recognition strategy adjustment in which re-recognition is performed while adjusting redundancy of data of an image model or updating an image model by detecting a recognition failure or reliability reduction. According to the method of Unexamined Japanese Patent Publication No. H10-021393, it is necessary to properly determine a model and a strategy update rule, and a certain level of experience is considered necessary to determine the rule.

There has been desired an adjusting method by which a user can properly execute matching processing based on a registered template, even when the user has little experience and knowledge.

### SUMMARY

An image processing device according to a certain aspect of the present invention includes: a matching processing unit that performs matching processing on an input image based on one or a plurality of preregistered templates; an interaction unit that outputs a result indicating a range of each region extracted from the input image assuming that the region matches one of the templates, and that receives from a user an input regarding whether an extraction result of each region is proper; and a control unit that executes optimization processing of a parameter to be used for the matching processing when there has been an input that the extraction result is not proper, and that executes update processing of the template according to success or failure of the matching result of each extracted region when there has been an input that the extraction result is proper.

An image processing method according to other aspect of the present invention includes: a step of performing matching processing on an input image based on one or a plurality of preregistered templates; a step of outputting a result indicating a range of each region extracted from the input image assuming that the region matches one of the templates, and receiving from a user an input regarding whether an extraction result of each region is proper; and a step of executing optimization processing of a parameter to be used for the matching processing when there has been an input that the extraction result is not proper, and executing update processing of the template according to success or failure of the matching result of each extracted region when there has been an input that the extraction result is proper.

An image processing program according to still other aspect of the present invention causes a computer to execute: a step of performing matching processing on an input image based on one or a plurality of preregistered templates; a step of outputting a result indicating a range of each region extracted from the input image assuming that the region matches one of the templates, and receiving from a user an input regarding whether an extraction result of each region is proper; and a step of executing optimization processing of a parameter to be used for the matching processing when there has been an input that the extraction result is not proper, and executing update processing of the template according to success or failure of the matching result of each extracted region when there has been an input that the extraction result is proper.

An image processing device according to a certain aspect of the present invention includes: a matching processing unit that performs matching processing on an input image based on a preregistered template; an interaction unit that indicates a region extracted from the input image assuming that the region matches a template and that receives an input regarding whether the region is proper; and a control unit that executes optimization processing of a parameter to be used for the matching processing when there has been an input that the region is not proper, and that executes update processing of the template when there has been an input that the region is proper.

According to the present invention, even when the user has little experience and knowledge, the user can perform adjustment to properly execute matching processing based on a registered template.

### BRIEF DESCRIPTION OF THE DRAWINGS

Fig. 1 is a schematic view of an example of an application using an image processing device according to an embodiment;
Fig. 2 is a schematic view of a hardware configuration of the image processing device according to the embodiment;
Figs. 3A and 3B show image examples corresponding to Case 1 that can occur in the adjustment processing according to the embodiment;
Fig. 4 shows an image example corresponding to Case 2 that can occur in the adjustment processing according to the embodiment;
Fig. 5 shows an image example corresponding to Case 3 that can occur in the adjustment processing according to the embodiment;
Fig. 6 is a schematic view showing a calculation method of "similarity" and "stability" according to the embodiment;
Fig. 7 is a flowchart showing a processing procedure of the adjustment processing in the image processing device according to the embodiment;
Figs. 8A and 8B show an operation/display example of assignment of a processing region of an input image;
Figs. 9A and 9B show an operation/display example of setting of a correct character string of the input image;
Figs. 10A and 10B show an operation/display example of first teaching;
Fig. 11 is an explanatory view of a display example of a recognition result of a character;
Fig. 12 shows an operation/display example of dictionary registration;
Fig. 13 shows an example of a recognition result after dictionary registration;
Fig. 14 shows an operation/display example displayed during execution of the recognition processing;
Figs. 15A and 15B show an operation/display example of additional teaching;
Figs. 16A and 16B show other operation/display example of teaching;
Fig. 17 is a schematic view for explaining detailed processing of teaching;
Fig. 18 shows an example of an operation display screen for setting details of measurement parameters;
Figs. 19A and 19B show examples of a displayed content when a detailed parameter has been changed;
Fig. 20 shows an example of an operation display screen in which a setting assistance function of measurement parameters has been installed;
Fig. 21 shows an example of a recognition result;
Fig. 22 shows an example that a portion which it is decided better to be connected or divided as a character is visualized; and
Fig. 23 is a schematic view of a functional configuration of the image processing device according to the embodiment.

### DETAILED DESCRIPTION

An embodiment of the present invention will be described in detail with reference to the drawings. In the drawings, identical or equivalent portions will be attached with the same signs, and description of these portions will not be repeated.

An image processing device according to the embodiment can be applied to various kinds of applications including matching processing on an input image based on one or a plurality of preregistered templates. In the present specification, the term "template" is used in the meaning including information that serves as a reference of matching processing. That is, the "template" can include an image (hereinafter, also referred to as "model image") itself that serves as a reference of the matching processing, an image obtained by mapping the model image to a spatial frequency domain, or a feature amount (for example, outline, edge amount, and spatial frequency) which indicates the model image.

Hereinafter, application of character recognition will be described.

### <A. Application example>

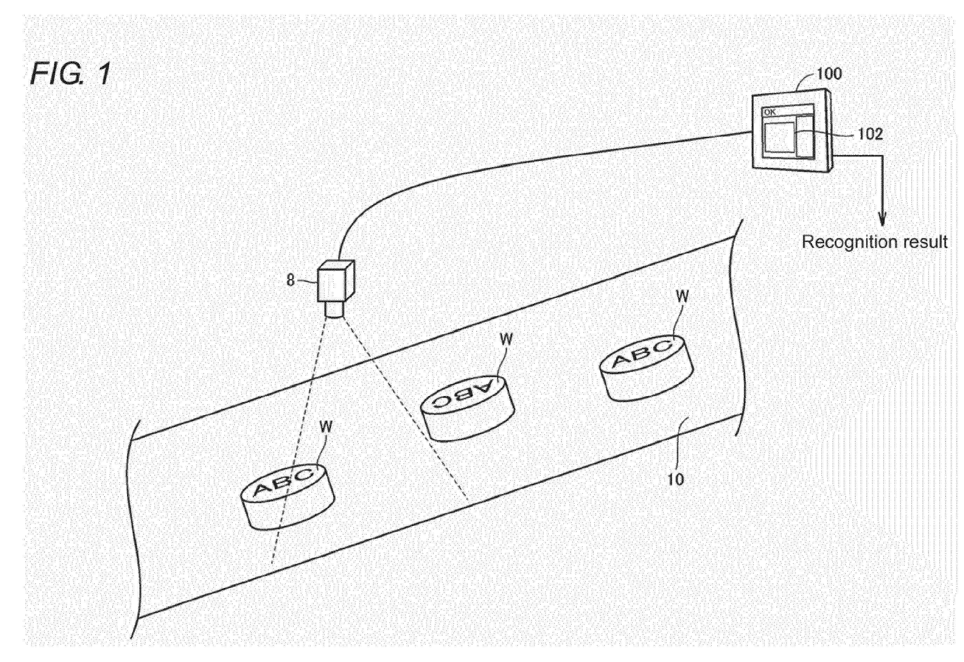

Fig. 1 is a schematic view of an example of an application using an image processing device 100 according to the embodiment. In Fig. 1, the image processing device 100 captures an image of part of a region on a conveyor 10 by using an imaging unit 8, and performs matching processing on an image (hereinafter, also referred to as "input image") obtained by the imaging. By this operation, the image processing device 100 recognizes a character printed on the surface of a detection object (hereinafter, also referred to as "workpiece W") conveyed on the conveyor 10, and outputs a recognition result.

The image processing device 100 has a standard template for each recognizable character, and can execute character recognition processing without preregistering a template according to the workpiece W. The standard template is also referred to as an "incorporated dictionary" in the present specification. In the character recognition processing using the standard template, when receiving a character that cannot be properly recognized, a template is added for the character that cannot be properly recognized. The additionally registered template is also referred to as a "user dictionary" in the present specification. Additionally registering the template to a certain character is also referred to as "dictionary registration" or "dictionary customization" in the present specification.

### <B. Hardware configuration of the image processing device 100>

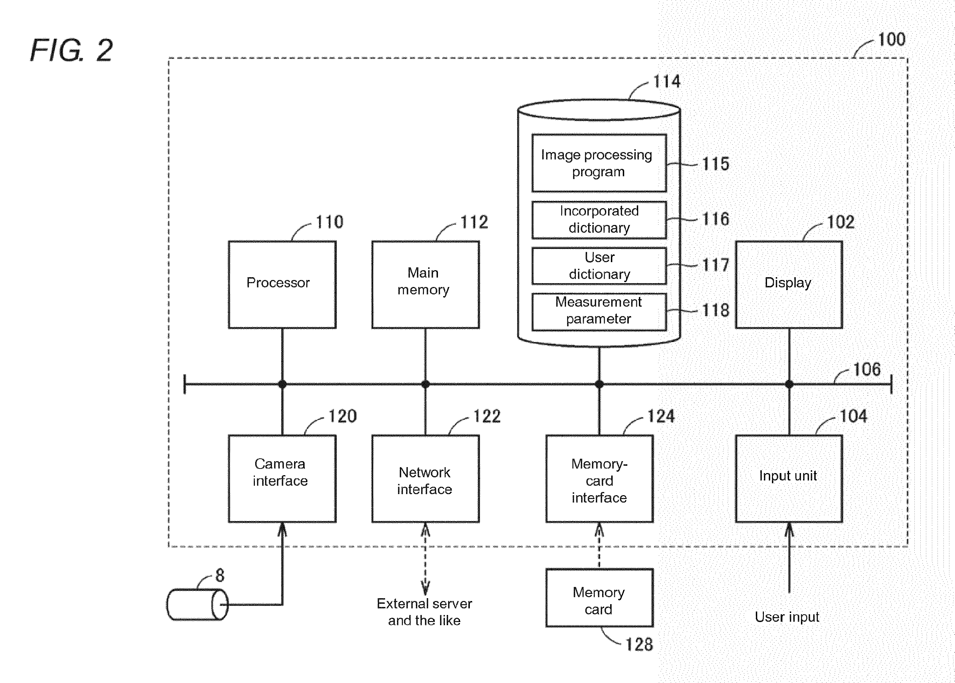

Fig. 2 is a schematic view of a hardware configuration of the image processing device 100 according to the embodiment. In Fig. 2, the image processing device 100 has representatively a structure following general-purpose computer architecture. The processor realizes various kinds of image processing described later, by executing a program installed in advance.

The image processing device 100 includes a display 102, an input unit 104, a processor 110 such as a CPU (Central Processing Unit) and an MPU (Micro-Processing Unit), a main memory 112, a hard disk 114, a camera interface 120, a network interface 122, and a memory card interface 124. These parts are connected to each other so as to be able to perform data communications via an internal bus 106.

The processor 110 reads an image processing program 115 stored in the hard disk 114, develops the image processing program 115 in the main memory 112, and executes an image processing method of the embodiment. The display 102 displays a result output including a recognition result following the execution of the image processing. A part or a whole of the recognition result obtained by executing the image processing may be output to an external server through the network interface 122.

The image processing program 115 is distributed in the state of being stored in a memory card 126, for example. In this case, the image processing program 115 stored in the memory card 126 is read through the memory card interface 124, and is then installed in the hard disk 114. Alternatively, the image processing program 115 may be configured to be distributed from the external server through the network interface 122.

The hard disk 114 stores an incorporated dictionary 116, a user dictionary 117, and a measurement parameter 118, in addition to the image processing program 115.

In the case of using the image processing device 100 having a structure following general-purpose computer architecture, there may be preinstalled an OS (Operating System) for providing a basic function of the computer. In this case, the image processing program 115 may be the one for executing processing by calling a necessary module in a predetermined order and/or in predetermined timing, out of program modules provided as part of the OS. That is, the image processing program 115 may not include all modules necessary for realizing the image processing method of the embodiment, and part of the necessary modules may be provided from the OS. Further, the image processing program 115 of the embodiment may be provided by being built in part of other program.

The camera interface 120 receives the input image obtained by imaging by the imaging unit 8. The imaging unit 8 is representatively configured by including imaging elements such as a CCD (Charge Coupled Device) and a CMOS (Complementary Metal Oxide Semiconductor) sensor, in addition to an optical system such as a lens. Fig. 1 and Fig. 2 show a configuration example that the imaging unit 8 is provided separately from the image processing device 100, and an input image to be subjected to image processing is provided from the imaging unit 8. However, the configuration is not limited to this example. For example, the image processing device 100 and the imaging unit 8 may be integrally configured, and both generation of the input image by imaging and the image processing may be integrally executed. Alternatively, the image processing device 100 may take in the input image to be subjected to image processing, via various kinds of memory mediums or communication mediums.

Alternatively, a part or a whole of functions provided by executing the image processing program 115 may be installed as an exclusive hardware circuit.

### <C. Summary>

The image processing executed by the image processing device 100 according to the embodiment includes ordinary recognition processing, and adjustment processing for adjustment prior to the recognition processing. According to the embodiment, in the adjustment processing, there is provided a function capable of performing more proper adjustment and setting in a simpler procedure.

The inventors of the present invention have found that it is possible to guide the user to a proper procedure, by classifying inconvenience of the adjustment processing into the following types of Case 1 to Case 3, and by deciding to which case any inconvenience corresponds. First, the classified Case 1 to Case 3 will be described.

### [Case 1] A case where a segmented result of the character is not proper

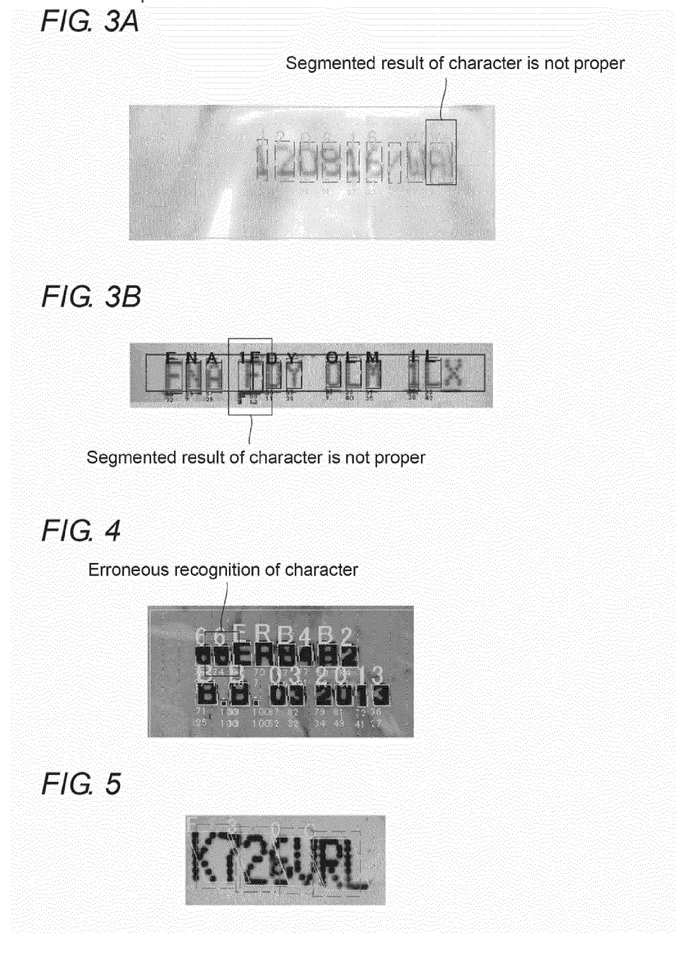

Figs. 3A and 3B show image examples corresponding to Case 1 that can occur in the adjustment processing according to the embodiment. In the input image shown in Fig 3A, although the number of characters included in the input image is 10, the number of recognized characters is 9. In the input image shown in Fig. 3B, the number of recognized characters in the second character string from the left consisting of 3 characters is 4. On the other hand, the number of recognized characters in the character string at the right end consisting of 3 characters is 2.

As in the above examples, there are cases where one character has been divided into two characters, and in contrast, two characters have been recognized as one character by connecting the two characters. As causes of the erroneous recognition, it is considered that a measurement parameter is not proper and that an imaging condition for a moving workpiece is not proper.

In the adjustment processing according to the embodiment, first, it is confirmed whether the number of characters set by a correct character string or a character string format matches the number of segmented characters. That is, it is decided whether the segmented result of the character is proper. For deciding whether the segmented result of the character is proper, the decision may be automatically made based on a correct character string or a character string format set in advance. Alternatively, after the segmented result of the character has been presented to the user, the image processing device 100 may ask the user whether the segmented result of the character is proper. For example, in a printed character string of a manufacturing date and the like, when the digit number included in the character string changes (for example, a difference between cases where January and October should be printed as "01" and "10" and where they should be printed as "1" and "10", respectively), it is preferable that the user visually confirms the character string.

When the segmented result of the character is not proper, the user is guided to execute an additional teaching.

In the present specification, the "additional teaching" means to execute again the "teaching" by referring to the information of a preceding execution result and the like of the "teaching". The "additional teaching" may be executed during the execution of the adjustment processing, and the "additional teaching" may be executed when an improper recognition result has been output during the execution of ordinary recognition processing.

### [Case 2] When a recognition result of a character is not proper although a segmented result of the character is proper

Fig. 4 shows an image example corresponding to Case 2 that can occur in the adjustment processing according to the embodiment. In the recognition result of the input image shown in Fig. 4, although segmentation of each character of the character string included in the input image has been successful, there is an error in the recognition result in that the character of "68" has been erroneously recognized as "66". That is, Fig. 4 shows a state that the erroneous recognition has occurred although the segmentation of characters is correct.

Representatively, because of a characteristic character font used for printing, there may occur erroneous recognition, and even when the character is successfully recognized, there may occur unstable recognition due to low similarity and low stability of a recognition result.

In the adjustment processing according to the embodiment, when there occurs erroneous recognition or when there is a high possibility of generating erroneous recognition although a rectangle surrounding each character has been properly set from the segmented result of the character, the user is guided to an operation for stabilizing the character recognition processing in the following procedure.

More specifically, when a correct character string has been set in the character string format, it is confirmed whether the correct character string and the recognition result match each other. Whether the correct character string and the recognition result match each other can be decided automatically. Alternatively, after a recognition result has been presented to the user, the image processing device 100 may ask the user whether the recognition result of a character is proper.

In this case, whether character recognition processing has been executed stably may be also decided together. For example, it is decided whether similarity and stability of recognized characters with respect to a template are equal to or lower than respective threshold values. When one of the similarity and stability is equal to or lower than a corresponding threshold value, it is decided that stability of the character recognition processing is low. When sizes (and widths and heights) of rectangles that surround the segmented characters are irregular and when adjacent characters are superposed, it may be decided that stability of the character recognition processing is low.

In any of the above decisions, when it has been decided that the recognition result does not match the correct character string, or when stability of the character recognition processing is low, the user is guided to an operation of dictionary registration in order to stabilize the character recognition processing.

### [Case 3] When a proper segmented result of a character is not obtained even when teaching is repeated

Fig. 5 shows an image example corresponding to Case 3 that can occur in the adjustment processing according to the embodiment. There can be also a case where a character font itself is difficult to recognize, and character recognition is extremely difficult due to a bad condition such as noise between characters. Fig. 5 shows an example of this case. In such a case, even when teaching has been repeated, there is a high possibility that an intended recognition result cannot be obtained. In this case, the user is guided to capture an image of the input image again (or change the imaging condition), or manually adjust the measurement parameter.

More specifically, an upper limit value of teaching repetition is preset. When the number of teaching repetition has reached the upper limit value, the user is guided to proceed to the imaging of the input image, or the user is guided to proceed to the adjustment of the measurement parameter.

In the adjustment processing according to the embodiment, by assuming at least Case 1 to Case 3, support is provided to the user to enable the user to properly set conditions and measurement parameters necessary to execute the ordinary recognition processing. In summary, in the image processing according to the embodiment, according to a recognition result, which one of optimization of measurement parameters and dictionary registration is proper is presented to the user.

Specifically, in the image processing, teaching is executed by using as an evaluation value, the number of characters included in the recognition result obtained by executing the character recognition processing, and similarity of the recognition result. Further, stability may be included in the evaluation value. Based on a result of the teaching, a cause analysis is performed and causes are classified according to the following policy.

First, it is decided whether the segmented result of the character is proper (Case 1). The decision can be automatically made based on the number of segmented characters and the size of the character rectangle. However, it is preferable to allow the user to visually confirm success/failure of the segmented result. When the segmentation of a character is not proper, it is decided that it is necessary to improve the measurement parameter. Therefore, the user is guided to execute the additional teaching. In the execution of the additional teaching, there are utilized measurement parameters that have been obtained by the teaching executed so far.

On the other hand, whether there is a reading mistake in spite of a proper segmented result of the character is decided (Case 2). At this time, when a value of similarity or stability as the evaluation value is lower than the threshold value, this may be regarded as an erroneous reading. When it has been decided that an erroneous reading has occurred, the corresponding character is considered to be a character that the image processing device 100 cannot easily read. Therefore, the user is guided to perform dictionary registration. However, when the reading is not stabilized even after the teaching has executed exceeding the upper limit number of times (Case 3), the user is urged to capture an image of the input image again or manually adjust the measurement parameter.

The adjustment processing including the above adjustment of the measurement parameter and the dictionary registration may be performed before executing the ordinary recognition processing. However, the adjustment processing is also executed when a certain NG has occurred during the execution of the ordinary recognition processing.

In this case, the situation of the NG of the recognition result is decided based on the evaluation value, and the image processing device 100 performs the cause analysis. By this arrangement, a valid measurement parameter is automatically optimized so that correct character recognition can be performed. The method is presented to the user at the same time. That is, after the cause analysis, which one of the adjustment of the measurement parameter and the dictionary registration is valid for the workpiece is presented to the user based on the result of the teaching. In deciding which one of the adjustment of the measurement parameter and the dictionary registration is to be used, character segmentation, presence or absence of erroneous reading, and values of similarity, stability, and the like are used.

### <D. Similarity and stability>

Similarity and stability that are used in the image processing according to the embodiment will be described.

In the present specification, "similarity" means an evaluation value that indicates how much there is resemblance between a partial image (an image in a rectangle which surrounds each character) indicating a character in the input image, and a character model (that is, a template) in a dictionary (the incorporated dictionary and the user dictionary). That is, "similarity" means the evaluation value obtained from a comparison between the dictionary data and the feature of the input character.

"Stability" indicates a difference in similarity between a character model (a first candidate) that has been evaluated as the most similar to a character in the input image and a character model (a second candidate) that has been evaluated as next similar to the character in the input image. That is, "stability" means the difference between the first candidate and the second candidate of a read character.

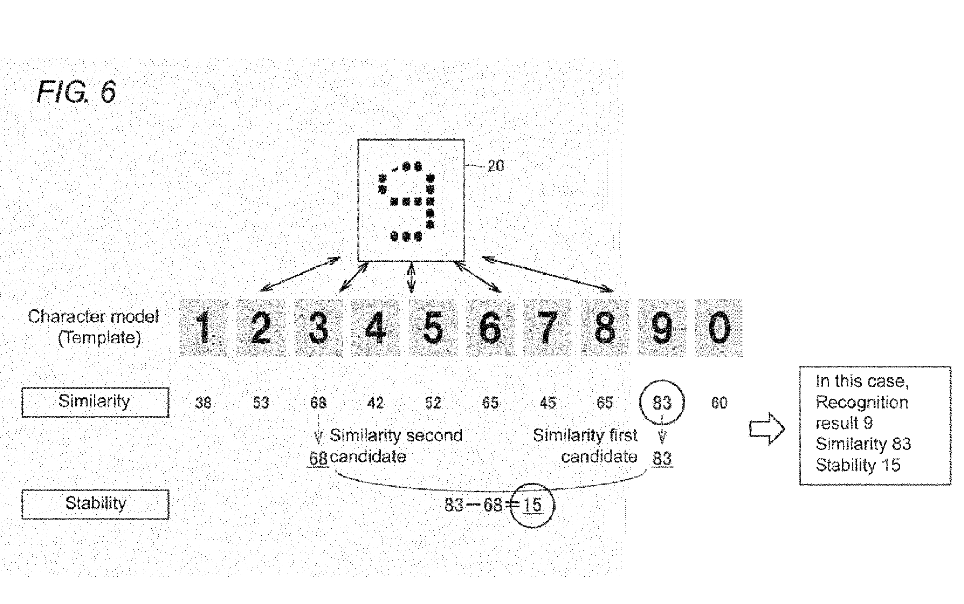

Fig. 6 is a schematic view showing a calculation method of "similarity" and "stability" according to the embodiment. In Fig. 6, similarity is calculated between a partial image 20 that indicates each character in the input image and a character model as a template of each character. For convenience of description, Fig. 6 shows a character model as an image. However, a feature amount of each character model may be held.

Similarity between the partial image 20 and each character model is calculated as shown in Fig. 6. In the example shown in Fig. 6, the partial image 20 is obtained by capturing an image of"9". Therefore, similarity between the character model "9" and the partial image 20 is the highest. A character model "3" has next high similarity to the partial image 20. In this case, highest similarity is set as a similarity first candidate, and next high similarity is set as a similarity second candidate.

A value "83" as a similarity first candidate is similarity, and "9" that a corresponding character model indicates is a recognition result. A difference "15" between the similarity first candidate and the similarity second candidate (83 - 68 in this example) is stability.

Depending on a shape and a state of a character (a partial image) included in the input image, similarity and stability are low in some cases, even when the character has been correctly recognized. For example, as shown in Fig. 6, when a structure of a character is relatively similar to that of other character, as seen in "3" and "9", and "8" and "6", stability tends to be low.

When both the similarity and the stability calculated are low, dictionary registration is valid. When similarity is high, from the experience, a possibility of erroneous recognition can be said to be low even when stability is relatively low.

### <E. Adjustment processing procedure in the image processing device 100>

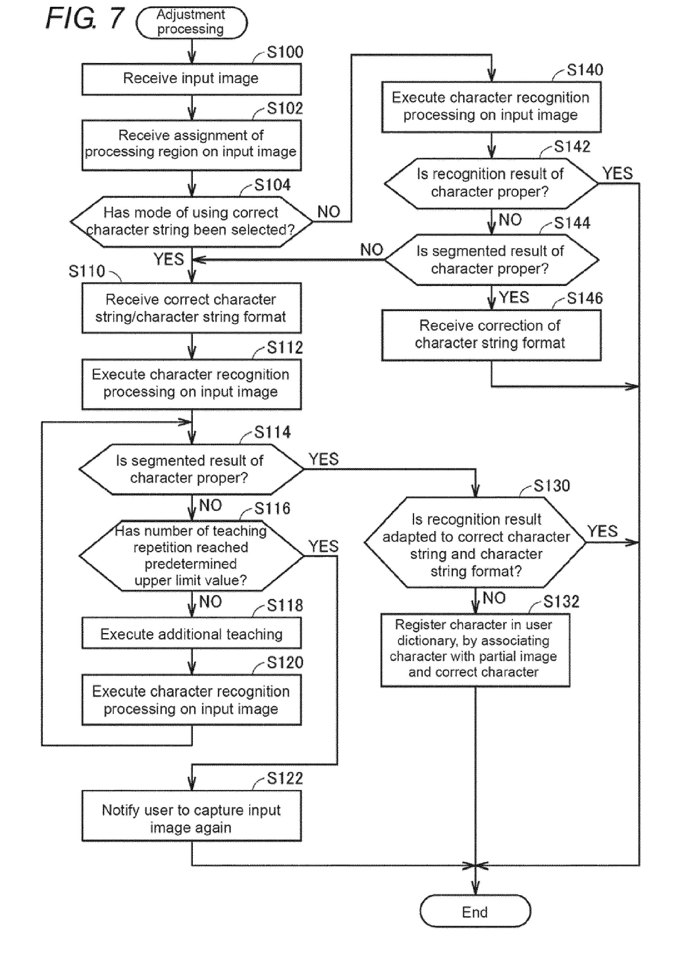

Fig. 7 is a flowchart showing a processing procedure of the adjustment processing in the image processing device 100 according to the embodiment. Representatively, the processor 110 executes the steps shown in Fig. 7 by executing the image processing program 115 (shown in Fig. 2).

In Fig. 7, the image processing device 100 receives an input image (Step S100). The user can generate the input image by disposing any workpiece W in the viewing field of the imaging unit 8, and by capturing an image of the workpiece W by the imaging unit 8. In the adjustment processing, it is preferable to generate the input image regarding the workpiece W that serves as a reference. The input image generated by using an imaging unit other than the imaging unit 8 may be given to the image processing device 100 via a network or the memory card 126.

Next, the image processing device 100 receives user assignment of a processing region on the input image (Step S102). The processing region means a region to be subjected to matching processing, and the user assigns any region. Next, the image processing device 100 decides whether the user has selected a mode of using a correct character string (Step S104). In the adjustment processing executed by the image processing device 100, the correct character string is not essential. When the mode using the correct character string has been selected, the image processing device 100 executes teaching by using information of the correct character string to be set. On the other hand when a mode not using the correct character string has been selected, the image processing device 100 executes teaching by using an instruction from the user. When the mode using the correct character string has been selected (YES in Step S104), the pieces of processing in and after Step S110 are executed. When the mode using the correct character string has not been selected (NO in Step S104), the pieces of processing in and after Step S140 are executed.

In Step S110, the image processing device 100 receives at least one of the correct character string and the character string format (Step S110). For the correct character string, a concrete character string ("ABC", for example) printed in the workpiece W included as a photographic subject in the input image is assigned. The character string format is information ("A##", for example, where "#" denotes any numeral) assigned by a character type and the number of characters of a character string to be printed in the workpiece W included as a photographic subject in the input image. By using the correct character string or the character string format, a result of the character recognition processing executed by the image processing device 100 can be evaluated. Based on the evaluation result, the template and the measurement parameter can be optimized.

Next, the image processing device 100 executes the character recognition processing on the input image, by using a standard template (the incorporated dictionary 116 shown in Fig. 2) (Step S112). That is, the image processing device 100 performs matching processing on the input image based on one or a plurality of preregistered templates. At this time, the matching processing for performing the character recognition includes the processing of extracting a region for each character included in the input image and recognizing the character included in each region, based on the template registered for each character.

At this time, the image processing device 100 also optimizes the measurement parameter. That is, the image processing device 100 determines the measurement parameter and the like by executing teaching.

The measurement parameter includes various kinds of setting values necessary for the character recognition processing. For example, the measurement parameter includes a font type of a character to be recognized (whether seal or dot printing), a font thickness, a dot interval (in the case of dot printing), a maximum width of a character string, a maximum value/a minimum value of height of a character string, an aspect ratio of a character string (a character aspect ratio), height of a hyphen in a character string, and the like.

Next, the image processing device 100 displays a segmented result of each character segmented from the input image by the character recognition processing in Step S112, and asks the user whether the segmented result of the character is proper (Step S114). That is, the image processing device 100 outputs a result of a range of each region extracted from the input image assuming that the region matches one of the templates. The image processing device 100 also receives from the user the input about whether the extraction result of each region is proper. That is, the image processing device 100 shows the region extracted from the input image on the basis that the region matches one of the templates, and also receives the input about whether the region is proper.

When the user has assigned that the segmented result of the character is not proper (No in Step S114), the pieces of processing in Steps S116 to S122 are executed. When the user has assigned that the segmented result of the character is proper (YES in Step S114), the pieces of processing in Steps S130 and S132 are executed. That is, when there has been an input that the extraction result of each region is not proper, the image processing device 100 executes the optimization processing of a measurement parameter to be used in the matching processing (Steps S116 to S122). When there has been an input that the extraction result is proper, the image processing device 100 executes the update processing of the template, according to success or failure of the matching result of each extracted region (Steps S130 and S132).

In Step S118, the image processing device 100 executes the additional teaching (Step S118). In the additional teaching, the measurement parameter is re-adjusted based on similarity and the like of the recognition result. In the additional teaching, a result of already executed teaching is utilized. That is, when there has been an input that the extraction result is not proper, the image processing device 100 optimizes again a parameter by utilizing a result of precedingly executed optimization processing of the parameter. That is, when there has been an input that the extracted region is not proper, the image processing device 100 executes the optimization processing of a parameter to be used in the matching processing.

Based on the measurement parameter re-adjusted by the additional teaching, the image processing device 100 executes the character recognition processing on the input image (Step S120), and executes again the pieces of processing in and after Step S114.

Before executing Step S118, the image processing device 100 decides whether the number of teaching repetition has reached the predetermined upper limit value (Step S116). When the number of teaching repetition has not reached the predetermined upper limit value (NO in Step S116), the processing Step S118 is executed.

On the other hand, when the number of teaching repetition has reached the predetermined upper limit value (YES in Step S116), the image processing device 100 notifies the user to capture an image of the input image again or to perform manual adjustment of the measurement parameter (Step S122), and stops the adjustment processing. That is, when a proper extraction result is not obtained even after the optimization processing of the parameter is repeated to the predetermined upper limit value, the image processing device 100 urges the user to perform at least one of the manual adjustment of the parameter and the change of the input image.

In Step S130, the image processing device 100 decides whether the recognition result is adapted to the correct character string and the character string format set in Step S110 (Step S130). More specifically, the image processing device 100 decides whether the set correct character string and the recognized character string completely match each other. That is, the image processing device 100 receives a correct character string of a character included in the input image. The image processing device 100 decides success or failure of the matching result by comparing a correct character string of the character and a recognition result of a character in each region.

When the correct character string and the recognized character string completely match each other, the image processing device 100 decides that the recognition result is adapted. Further, the image processing device 100 decides whether one of or both of the similarity and the stability of recognized characters with respect to the template exceed a predetermined threshold value. When the similarity or the stability exceeds the predetermined threshold value, the image processing device 100 decides that the recognition result is adapted.

When it has been decided that the recognition result is not adapted to the correct character string and the character string format (NO in Step S130), the image processing device 100 registers in the user dictionary the character which has been decided to be not adapted, by associating the character with a partial image corresponding to the character and with a correct character of the character (Step S132). That is, the image processing device 100 adds as the template a partial image corresponding to a character which does not match a correct character string of the character out of a recognition result of the character. That is, when there has been an input that the extracted region is proper, the image processing device 100 executes the update processing of the template.

When it has been decided that the recognition result is adapted to the correct character string and the character string format (YES in Step S130), or after executing Step S132, the image processing device 100 ends the execution of the adjustment processing.

In Step S140, the image processing device 100 executes the character recognition processing on the input image, by using the standard template (the incorporated dictionary 116 shown in Fig. 2) (Step S140). At this time, the image processing device 100 also optimizes the measurement parameter.

Next, the image processing device 100 displays the segmented result of each character segmented from the input image by the character recognition processing in Step S140, and also asks the user whether the recognition result of the character is proper (Step S 142). When the user has assigned that the recognition result of the character is proper (YES in Step S142), the image processing device 100 ends the execution of the adjustment processing.

On the other hand, when the user has assigned that the recognition result of the character is not proper (NO in Step S 142), the image processing device 100 asks the user whether the segmented result of the character is proper (Step S144). When the user has assigned that the segmented result of the character is not proper (NO in Step S144), the pieces of processing in and after Step S110 are executed. On the other hand, when the user has assigned that the segmented result of the character is proper (YES in Step S144), the image processing device 100 urges the user to correct the character string format and also receives correction to the character string format from the user (Step S146). Then, the image processing device 100 ends the execution of the adjustment.

In the flowchart shown in Fig. 7, a processing procedure is shown that the image processing device 100 asks the user whether the segmented result of the character is proper (Step S114) and thereafter, the image processing device 100 decides whether the recognition result is adapted to the correct character string and the character string format (Step S130). However, when the correct character string and the character string format have been preset, it is also possible to decide first whether the recognition result is adapted to the correct character string and the character string format. In this case, when it has been decided that the recognition result is not adapted to the correct character string and the character string format, the image processing device 100 may automatically start the additional teaching without asking the user whether the segmented result of the character is proper. That is, the image processing device 100 decides whether each extracted region is adapted to a preset character string format. When each extracted region is not adapted to the character string format, the image processing device 100 may execute optimization processing of a parameter to be used in the matching processing, without waiting for the input from the user.

### <F. Operation/display example>

Operation/display examples of the adjustment in the image processing device 100 according to the embodiment will be described in relation to the corresponding step of the flowchart in Fig. 7.

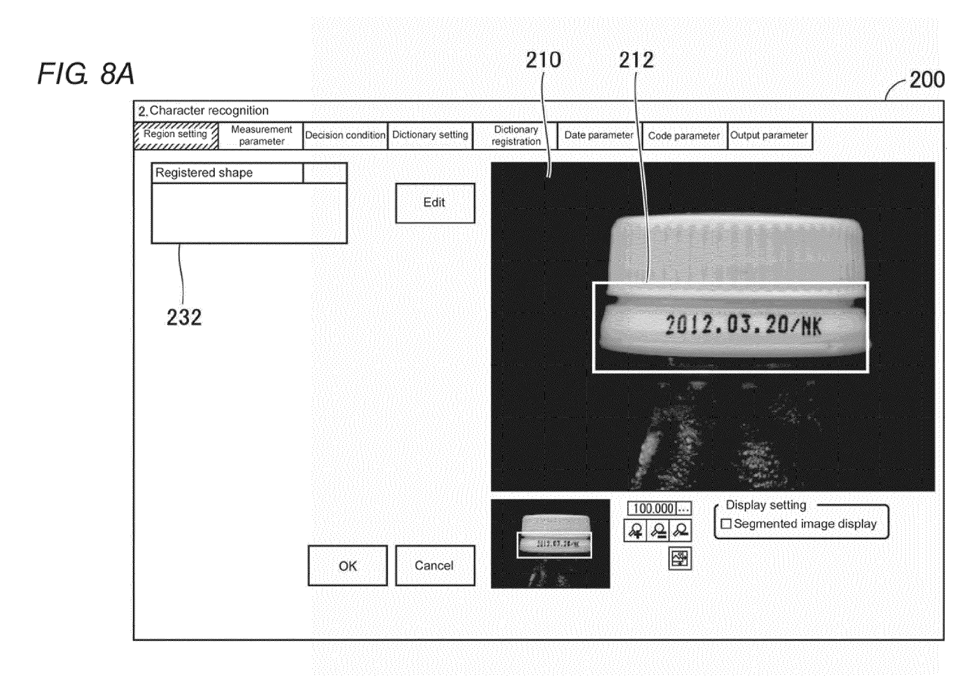

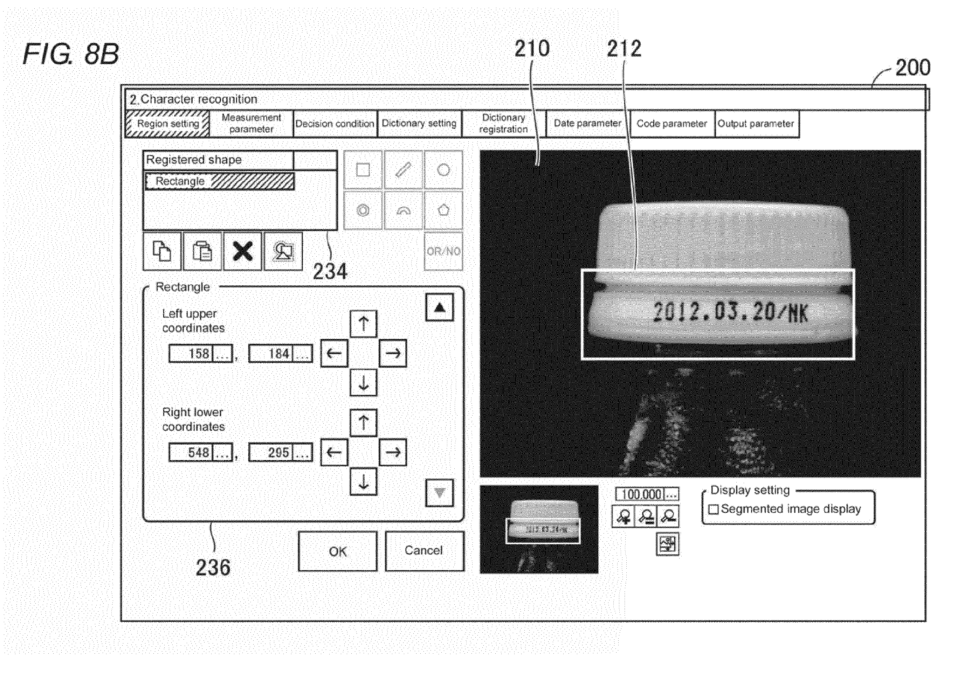

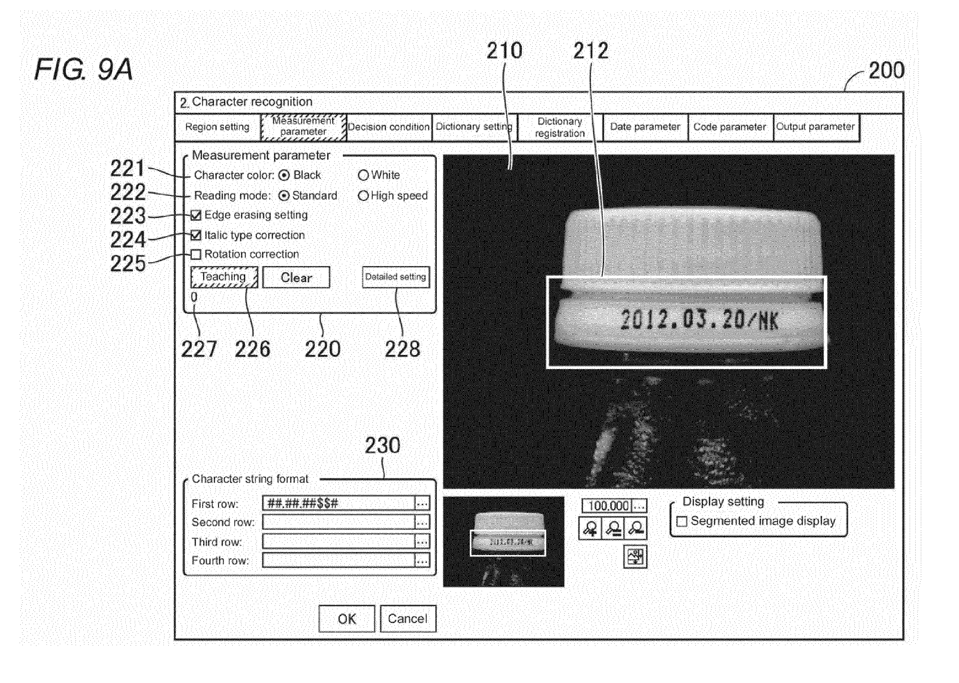

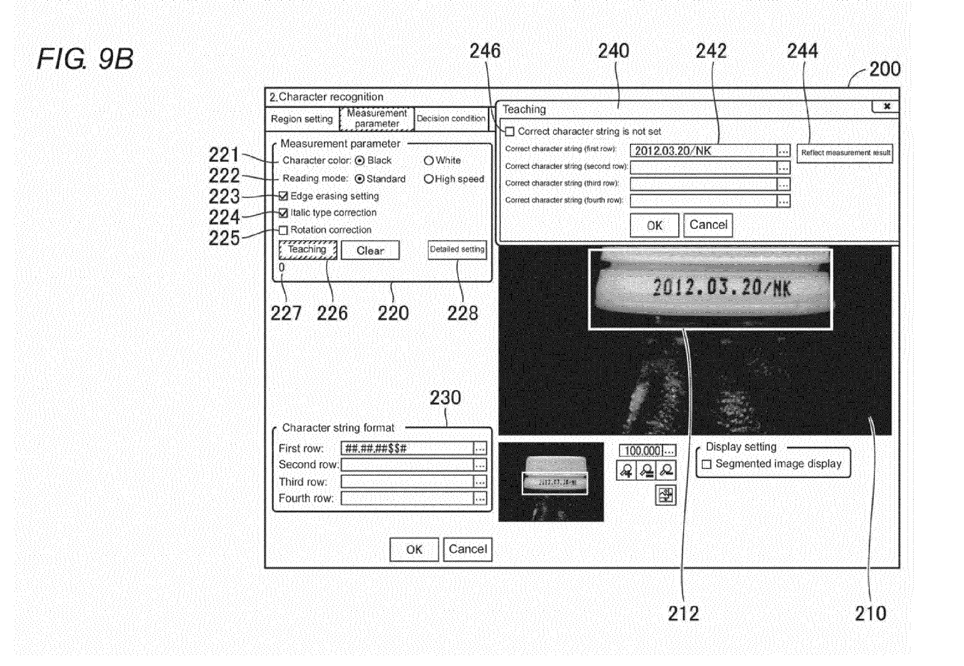

Figs. 8A and 8B show an operation/display example of assignment of a processing region of the input image. Figs. 9A and 9B show an operation/display example of setting of a correct character string of the input image. After the adjustment has been started, an operation display screen 200 as shown in Fig. 8A is displayed in the display 102 of the image processing device 100. The operation display screen 200 displays an input image 210 and also displays an area 232 for assigning the processing region. The user selects an edit button included in the area 232 of the operation display screen 200 shown in Fig. 8A, and sets a shape of the processing region. After the edit button has been selected, the screen shifts to the operation display screen 200 as shown in Fig. 8B.

In the operation display screen 200 in Fig. 8B, there are shown an area 234 for selecting a shape of an assigned processing region, and an area 236 for assigning a position to arrange the processing region in the input image. The user selects a shape of the processing region by operating the icon included in the area 234, and also performs a drag operation on the input image 210, and an operation to the arrow button included in the area 234, or numerical value input to the input box so that the user assigns a size and an arrangement position of the processing region of a selected shape. In the example of Figs. 8A and 8B, a rectangle has been selected as a shape of the processing region.

Accordingly, in the operation display screen 200 of Figs. 8A and 8B, the user assigns a processing region 212 on the input image 210 (Step S102 in Fig. 7).

After the assignment of the processing region has been completed, the operation display screen 200 in Fig. 9A is displayed. The operation display screen 200 in Fig. 9A displays the input image 210, and also includes an area 220 for setting a measurement parameter, and an area 230 for setting a character string format. In the area 220, there are selectably displayed a radio button 221 for selecting a character color, a radio button 222 for selecting a reading mode, a check box 223 for validation/invalidation of an edge erasing setting, a check box 224 for validation/invalidation of an italic type correction, and a check box 225 for validation/invalidation of a rotation correction.

In the area 220, there are arranged a button 226 for starting teaching, and a button 228 for setting in more detail the measurement parameter. Further, teaching and the number of teaching repetition 227 may be displayed.

In the area 230, there can be set a format of a character string included in the input image. In the example of Fig. 9A, formats of four rows can be set. In the character string format, there can be used a regular expression including "#" that indicates any numeral, and "$" that indicates any alphanumeric character.

When the user has selected the button 226 of the operation display screen 200 in Fig. 9A, teaching is started. More specifically, as shown in Fig. 9B, an input dialog 240 for setting the correct character string is displayed. The input dialog 240 includes an input box 242 for setting a correct character string for each row, and a check box 246 for selecting a mode that uses the correct character string.

When the check box 246 has been checked, it is regarded that a mode that does not use the correct character string has been selected (corresponding to NO in Step S104 in Fig. 7).

On the other hand, when the check box 246 has not been checked (corresponding to YES in Step S104 in Fig. 7), the user sets the correct character string in the input box 242 (Step S110 in Fig. 7). When the user selects a button 244 for reflecting a measured result, character recognition processing is executed on (the processing region 212 of) the input image 210 (Step S112 in Fig. 7). That is, a first teaching is executed.

That is the user executes the character recognition processing by performing a prior setting of the assignment of the processing region 212 and the setting of the correct character string. Accordingly, the first teaching is executed.

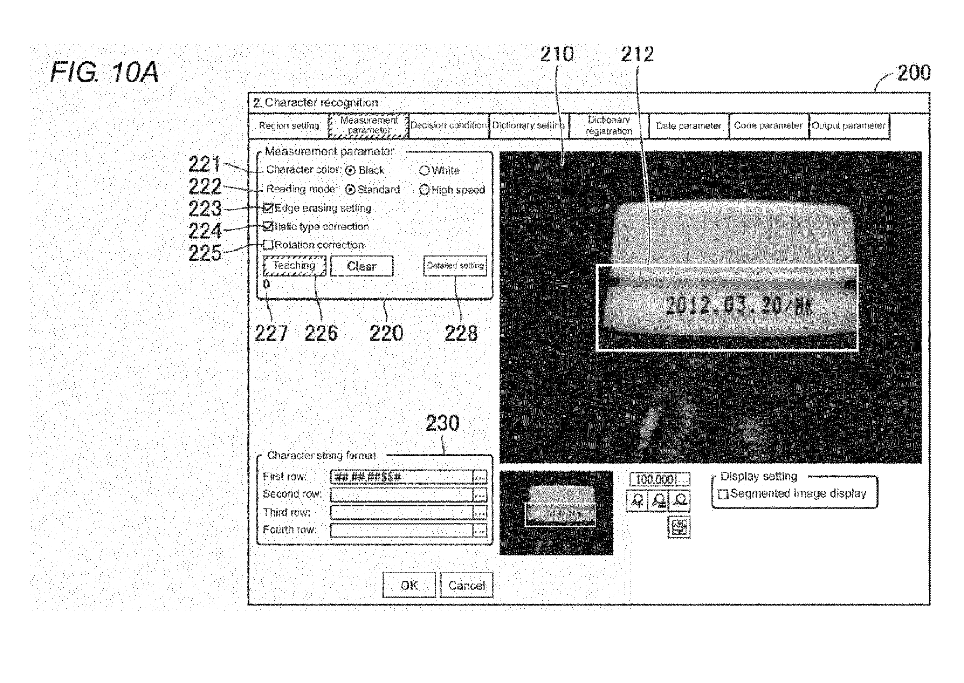

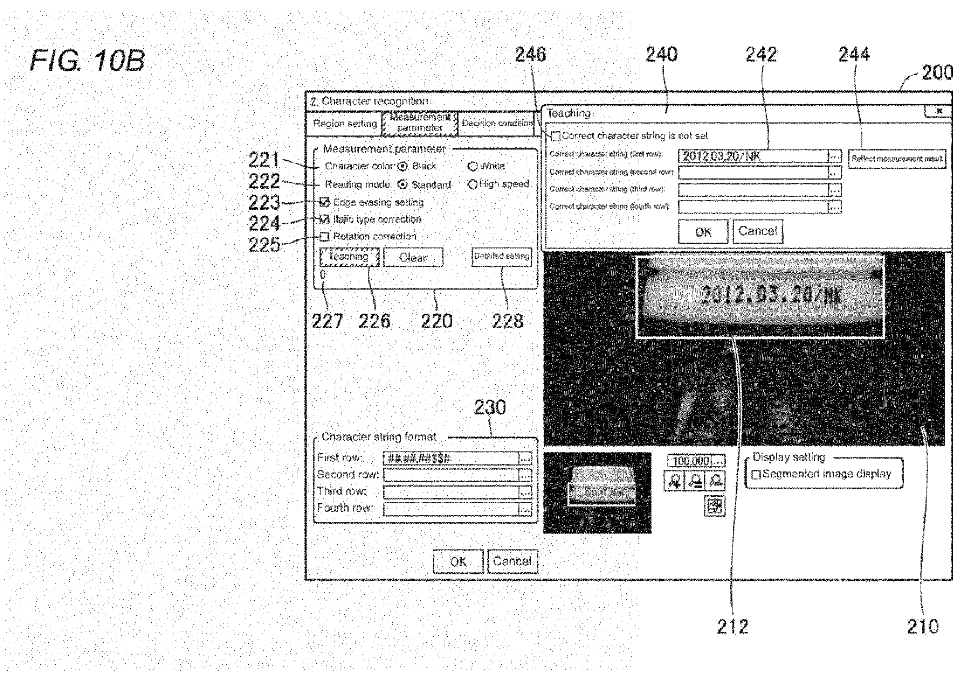

Figs. 10A and 10B show an operation/display example of the first teaching. When the character recognition processing including the first teaching has been executed, an optimum measurement parameter is determined for the partial image of the processing region 212 that is set in the input image 210.

As shown in Figs. 10A and 10B, in the processing region 212, there are displayed a recognition result (a recognized character), a rectangle that surrounds each character as a segmented result of the character, and similarity and stability of each recognized character.

As shown in Fig. 10A, after executing the character recognition processing, the image processing device 100 displays the segmented result of each character segmented from the input image by the character recognition processing, and also asks the user whether the segmented result of the character is proper. That is, on the operation display screen 200, there is displayed a dialog 250 of "Is the segmentation correct?" (Step S114 in Fig. 7). When the segmented result of the character is proper, the user selects a button 252 of "OK" of the dialog 250 (corresponding to YES in Step S114 in Fig. 7). Then, the operation display screen 200 shifts to the content as shown in Fig. 10B.

On the other hand, when the segmented result of the character is not proper, the user selects a button 254 of "cancel" of the dialog 250 (corresponding to NO in Step S114 in Fig. 7). For example, when a rectangle indicating a segmented character does not match each one character, the user selects the button 254 of "cancel". Then, the character recognition processing, that is, the teaching, is executed again.

The image processing device 100 first asks the user to confirm whether each character has been segmented as intended. Although the example shows a case where the user is asked for a decision, the image processing device 100 may automatically decide.

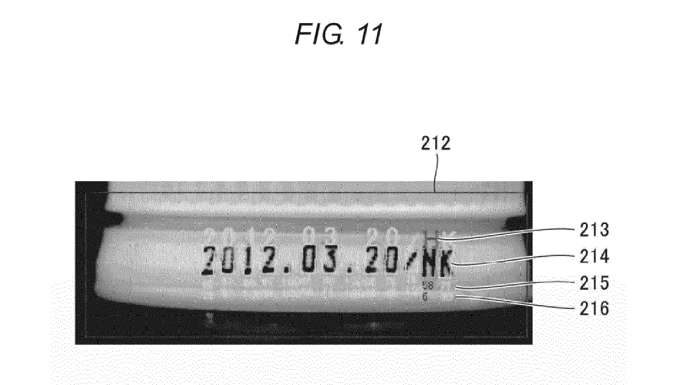

Fig. 11 is an explanatory view of a display example of a recognition result of a character. In Fig. 11, for each segmented character, there are displayed a recognition result 213, a rectangle 214 that surrounds each character, similarity 215, and stability 216.

The rectangle 214 that surrounds each character corresponds to a frame indicating a range of each extracted region, and is displayed in superposition with the input image. It is preferable that the rectangle 214 is displayed in a mode different from that of the input image in brightness and chroma. Further, a flicker display and the like may be used. In place of the rectangle 214, or in addition to the rectangle 214, coordinate values indicating a rage of each extracted region may be displayed.

That is, in the matching processing of the image processing device 100, there is calculated similarity as a matching degree between a partial image included in each extracted region and one or a plurality of templates. Then, the image processing device 100 outputs a value of highest similarity of each extracted region, by associating the value with each region, and also outputs a value of stability as a difference between the value of highest similarity and a value of next high similarity, by associating the value of stability with each region.

However, a display item and a display position are not limited to the mode shown in Fig. 11. Out of the characters recognized from the input image, in order to distinguish between a character that does not match a corresponding character of the correct character string and a character that matches a corresponding character of the correct character string, display modes of these characters may be differentiated. For example, for a character that does not match a corresponding character of the correct character string, the recognition result may be displayed in a "red color". At the same time, for a character that matches a corresponding character of the correct character string, the recognition result may be displayed in a "green color". That is, the image processing device 100 displays a recognition result of the character in association with each extracted region, and also displays a character that does not match a corresponding character of the correct character string in a mode different from that of a character that matches a corresponding character of the correct character string, out of a recognition result of the characters.

Further, for each of the similarity and the stability, a display mode may be also differentiated based on a size relationship with a corresponding threshold value. For example, regarding the similarity and the stability, a value exceeding a preset threshold value may be displayed in a "green color", and that the character recognition processing is stable may be notified to the user. On the other hand, regarding the similarity and the stability, a value that is equal to or lower than the preset threshold value may be displayed in a "red color", and that the character recognition processing is unstable may be notified to the user. Alternatively, there may be performed gradation display of differentiating colors according to the level of the similarity or the stability.

In Figs. 10A and 10B again, the image processing device 100 decides whether the recognition result is adapted to the preset correct character string and character string format. When the image processing device 100 has decided that the recognition result is not adapted to the correct character string and the character string format (corresponding to NO in Step S130), the image processing device 100 displays the dialog 250 for guiding the user to register the character in the user dictionary as shown in Fig. 10B. That is, on the operation display screen 200, a dialog 260 of "The following character will be registered in the dictionary: N" is displayed. In the example shown in Figs. 10A and 10B, although the segmented result of the character is proper, the character "N" in the processing region 212 is erroneously recognized as "H". Therefore, the image processing device 100 recommends dictionary registration to the user so that the partial image concerned is recognized as the character "N".

When the user has selected a button 262 of "OK" of the dialog 260, the image processing device 100 registers in the user dictionary the partial image corresponding to the character "N" and the correct character of the character while associated with each other (Step S 132 in Fig. 7). That is, the character concerned is automatically registered in the user dictionary. When the user has selected a button 264 of "cancel" of the dialog 260, dictionary registration is not performed.

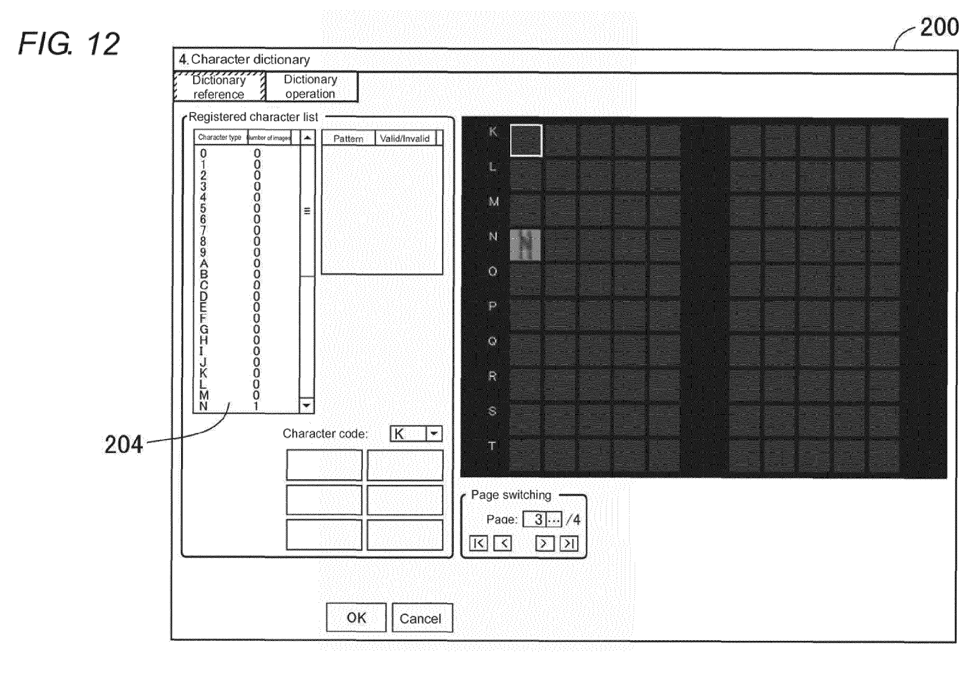

Fig. 12 shows an operation/display example of dictionary registration. More specifically, an operation display screen 202 shown in Fig. 12 shows a registered content of the user dictionary. Based on the result of erroneous recognition shown in Figs. 10A and 10B, the partial image extracted from the input image 210 is registered in the user dictionary as shown in Fig. 12, as an image of the character "N". The operation display screen 202 includes an area 204 in which the number of images registered for each character is listed.

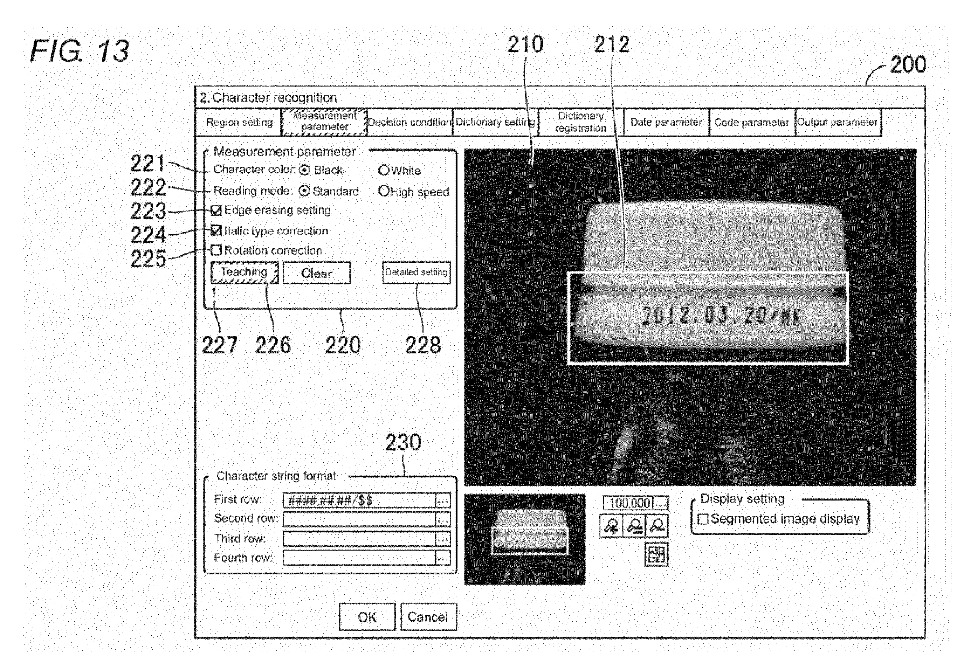

Fig. 13 shows an example of a recognition result after dictionary registration. When the dictionary registration as shown in Fig. 12 has been performed, a correct recognition result is displayed as shown in Fig. 13. In the operation display screen 200 in Fig. 13, it can be understood that the character in the processing region 212 set on the input image 210 has been properly recognized. That is, by comparing Fig. 13 to Figs. 10A and 10B, it can be understood that the character of "N" in the input image 210 has been correctly recognized by the dictionary registration.

The adjustment processing is completed by the above procedure. By using the measurement parameter optimized by the above adjustment processing and the user dictionary, ordinary recognition processing is executed. During the execution of the ordinary recognition processing, when an error has occurred in the recognition result of a certain workpiece W, or when stability of the recognition result has become lower than the predetermined threshold value, the additional teaching is executed.

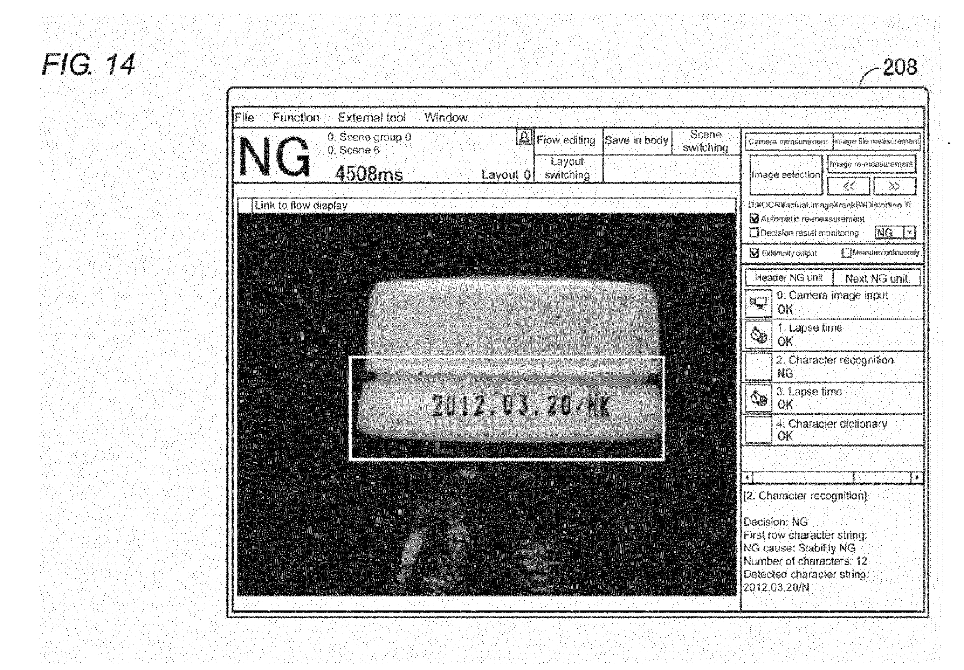

Fig. 14 shows an operation/display example displayed during execution of the recognition processing. In an operation display screen 208 shown in Fig. 14, because stability is lower than a predetermined value, the stability has been decided as "stability NG". The image processing device 100 can perform the additional teaching during the execution of the recognition processing. That is, during the execution of the character recognition processing by using a measurement parameter optimized by the first teaching, when reading NG has occurred in a certain workpiece W, the additional teaching can be executed.

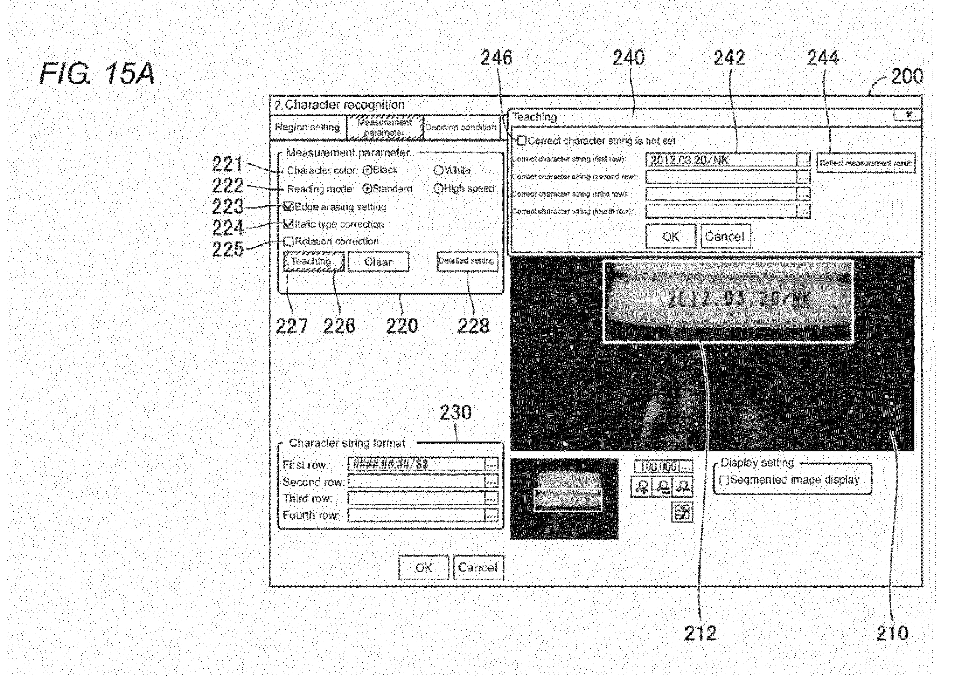

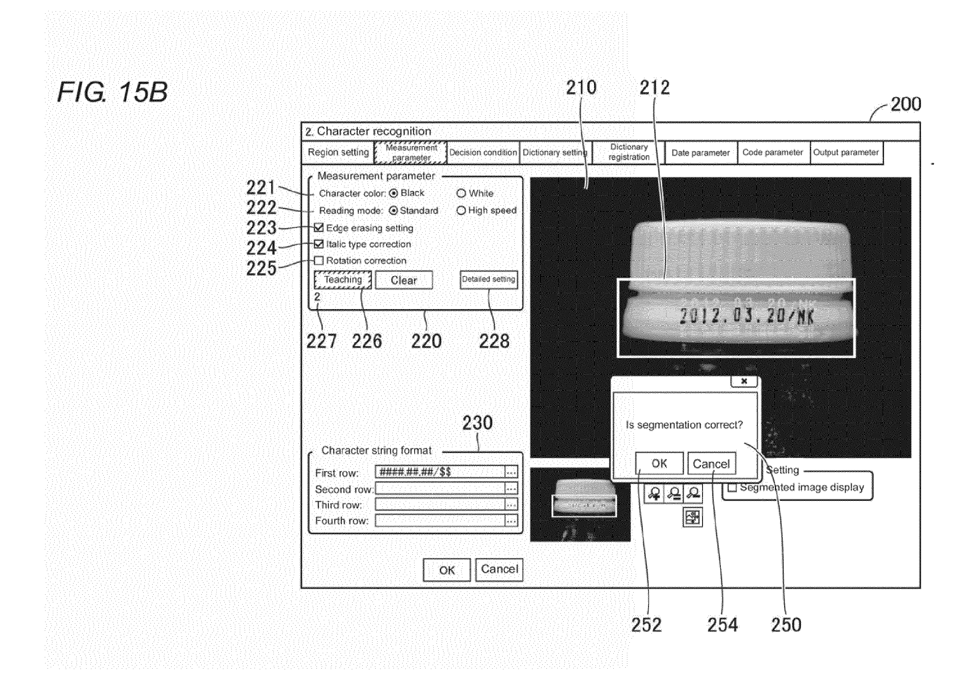

Figs. 15A and 15B show an operation/display example of the additional teaching. When the character recognition processing including the first teaching has been executed, an optimum measurement parameter is determined for the partial image of the processing region 212 that is set in the input image 210. As shown in Fig. 15A, in the additional teaching, like in the first teaching, the input dialog 240 for setting a correct character string is displayed. When the user has set the correct character string in the input box 242 and has selected the button 244 for reflecting the measured result, the additional teaching is executed by using the input image in which reading NG has occurred.

Further, as shown in Fig. 15B, the image processing device 100 displays the segmented result of each character segmented from the input image by the character recognition processing using the measurement parameter adjusted by the additional teaching, and also asks the user whether the segmented result of the character is proper. In the example shown in Fig. 15B, by adjusting the measurement parameter by the additional teaching, a proper recognition result has been obtained. That is, the additional teaching has been successful on the input image in which reading NG had occurred. When the additional teaching has not been successful, as described above about the first teaching, the user is guided to the operation of dictionary registration.

The recognition processing is continued, by using a measurement parameter after the measurement parameter has been adjusted by the re-teaching.

In the column of the number of repetition 227 in the area 220 in Fig. 15B, the number of teaching repetition is displayed. The image processing device 100 internally holds the information about whether the executed teaching is first time or additional (that is, second time or later) teaching. In the case of the additional teaching, the image processing device 100 refers to the information of an execution result of preceding teaching and the like.

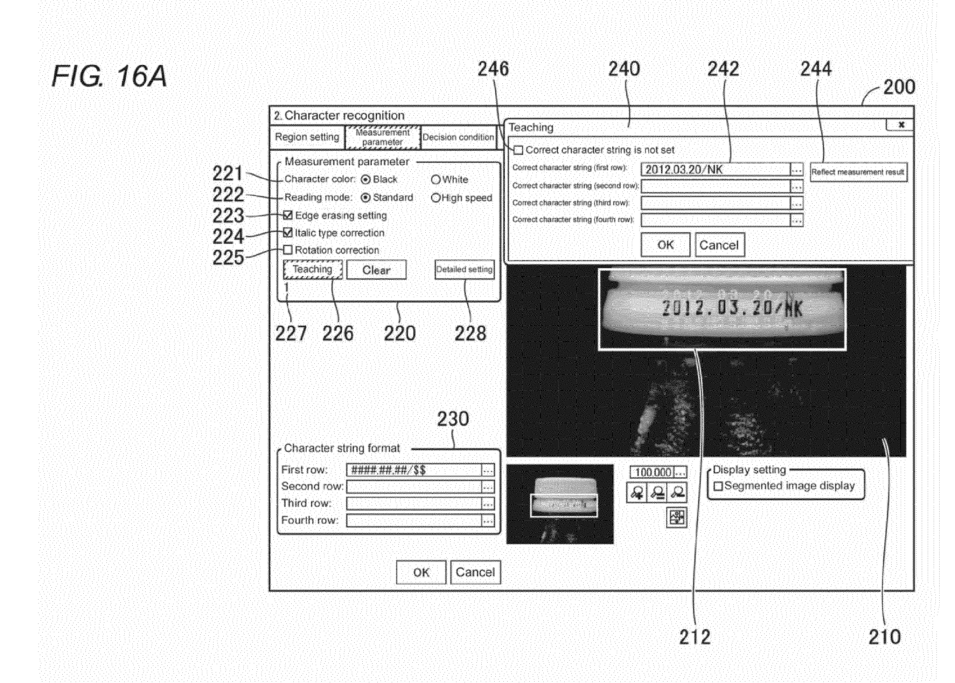

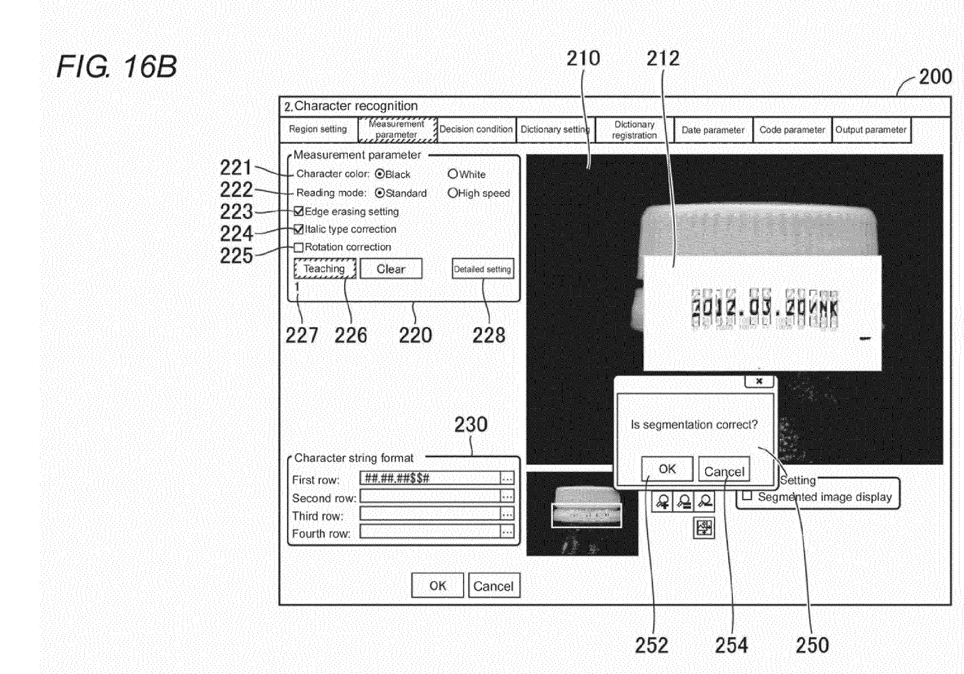

A result of the teaching (the character recognition processing) may be displayed after binarizing the result. Figs. 16A and 16B show other operation/display example of teaching. As shown in Fig. 16A, when the user has set the correct character string on the input dialog 240, the teaching (the character recognition processing) is executed. A result of the teaching is displayed in a mode as shown in Fig 16B. By displaying the result of teaching (the character recognition processing) in the binarized mode as shown in Fig. 16B, the user can more easily confirm the recognition result of the character.

### <G. Detailed processing of teaching>

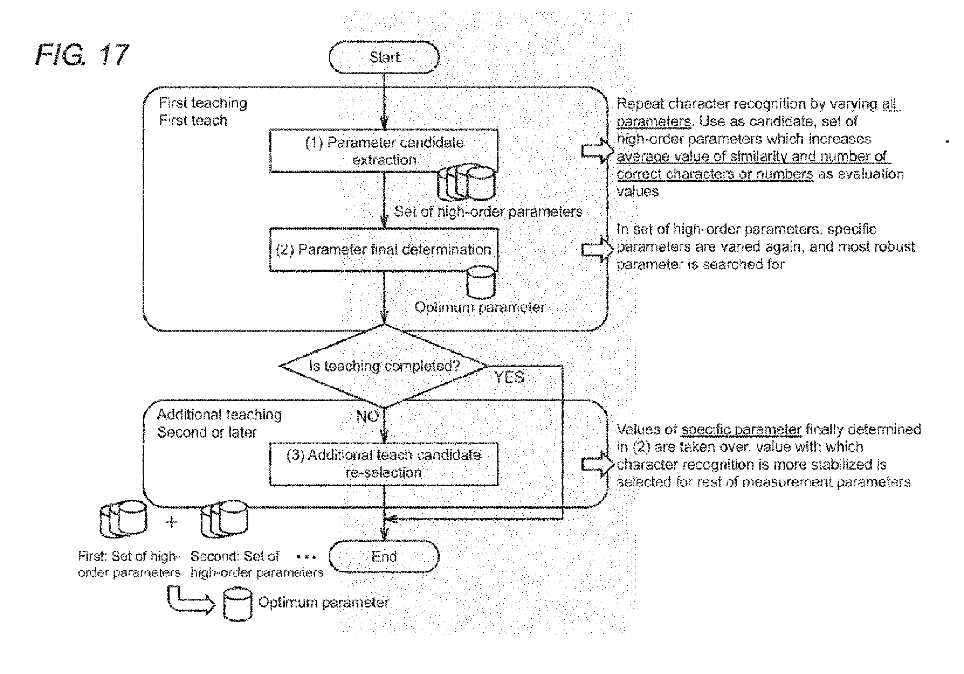

A concrete processing example of the above teaching will be described. Fig. 17 is a schematic view for explaining detailed processing of teaching. Fig. 17 shows an example of executing the first teaching and the additional teaching together in a series of processing. However, the first teaching and the additional teaching can be also executed at independent timing.

In Fig. 17, in the first teaching, one input image (an image for teaching) is used for searching optimum measurement parameters. On the other hand, in the additional teaching, in addition to the first input image, a separate input image is used to select measurement parameters capable of further stabilizing the character recognition processing.

Specifically, in the first teaching, first, (1) parameter candidates are extracted. Specifically, character recognition is repeated by varying all measurement parameters. There is set as a candidate a set of high-order parameters which increases an average value of similarity and the number of correct characters or numbers as evaluation values. At this time, the all measurement parameters include a character height, a character aspect ratio, a dot interval (lateral), a dot interval (vertical), a thickness level, a character width, and the like.

Next, (2) for the set of high-order parameters extracted in the processing (1), specific measurement parameters are varied again, and the most robust measurement parameter is searched for. As the specific parameters, parameters having a relatively large influence to stability of the character recognition, such as a character height, a dot interval (lateral), and a dot interval (vertical) are varied.

By the above pieces of processing (1) and (2), an optimized measurement parameter is determined. Based on the result of the character recognition processing by the determined measurement parameter, when it has been decided that the measurement parameters further need to be adjusted, the additional teaching is executed.

By the additional teaching, (3) while the values of the specific parameters finally determined in the first teaching are taken over, a value with which the character recognition is more stabilized is selected for the rest of measurement parameters. That is, the values of the measurement parameters such as a character height, a dot interval (lateral), and a dot interval (vertical) determined by the processing (2) are taken over, and teaching by using a separate input image is performed. A measurement parameter which is the most robust is selected again by varying again the rest of measurement parameters such as a character thickness and a character aspect ratio.

The additional teaching is suitably repeated according to necessary timing.

### <H. Adjustment supporting function of measurement parameter>

In order to support adjustment of measurement parameters, it is preferable to visualize the content of the measurement parameters, in addition to displaying the measurement parameters by numerical values. The visualizing supports the user to adjust measurement parameters.

### (h1. Adjustment and visualization of detailed parameter)

When a proper segmented result of the character cannot be obtained even after repeating the teaching as described above, the user is guided to manually adjust the measurement parameter. The measurement parameters are set in more detail. In order to support the adjustment of the measurement parameters, the following visualization may be performed.

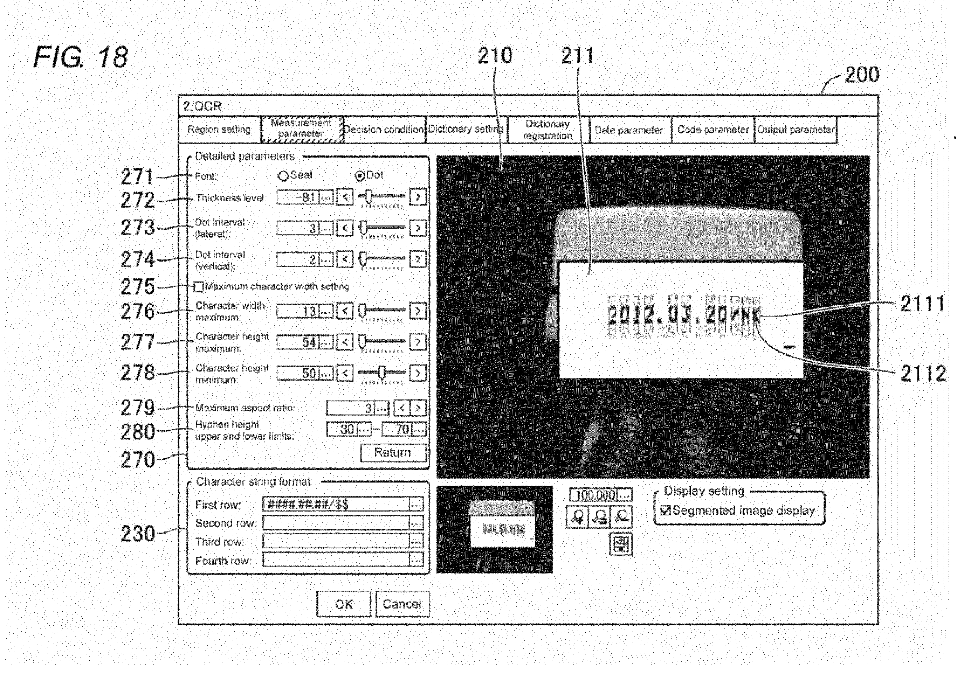

Fig. 18 shows an example of an operation display screen for setting details of measurement parameters. The operation display screen 200 in Fig. 18 displays the input image 210, and also includes an area 270 in which the measurement parameters are set in more detail. In order to a set detailed parameter of the measurement parameter, the area 270 includes a radio button 271 for selecting a font type, an input box 272 for setting a thickness level of a font, input boxes 273 and 274 for setting dot intervals (lateral and vertical, respectively) when dot printing has been selected, a check box 275 for validation/invalidation of a maximum character width setting, an input box 276 for setting a maximum value of a character width, input boxes 277 and 278 for setting a maximum value and a minimum value of a character height, respectively, an input box 279 for setting a lateral/vertical ratio (a character aspect ratio) of a character, and an input box 280 for setting a height of a hyphen in a character string.

In order to enable the user to grasp at a glance a correspondence relationship between the detailed parameter and the actual recognition result, a processing region 211 set on the input image 210 displays support display related to the detailed parameter, in addition to display of the recognition result. That is, it is preferable to provide a display function capable of artificially visualizing internal processing, not displaying only a numerical value of a detailed parameter concerning the character recognition.

In the processing region 211 shown in Fig. 18, the size of a rectangle 2111 that surrounds each recognized character shows a maximum value of a character width set in the input box 276, and a maximum value of a character height set in the input box 277. That is, a lateral width of the rectangle 2111 shows a maximum value of a character width, and a vertical width of the rectangle 2111 shows a maximum value of the character height.

Further, in superposition with each recognized binarized character, an image 2112 of a gray scale is displayed. The image 2112 shows a value of a thickness level set in the input box 272, a value of a dot interval (lateral) set in the input box 273, and a value of a dot interval (vertical) set in the input box 274. That is, the image 2112 shows a range prescribed by a value of a thickness level, a dot interval (lateral) and a dot interval (vertical).

When the rectangle 2111 and the image 2112 have been displayed in superposition with the recognition result, the user can grasp at a glance validity and stability of the detailed parameter that is being set at present.

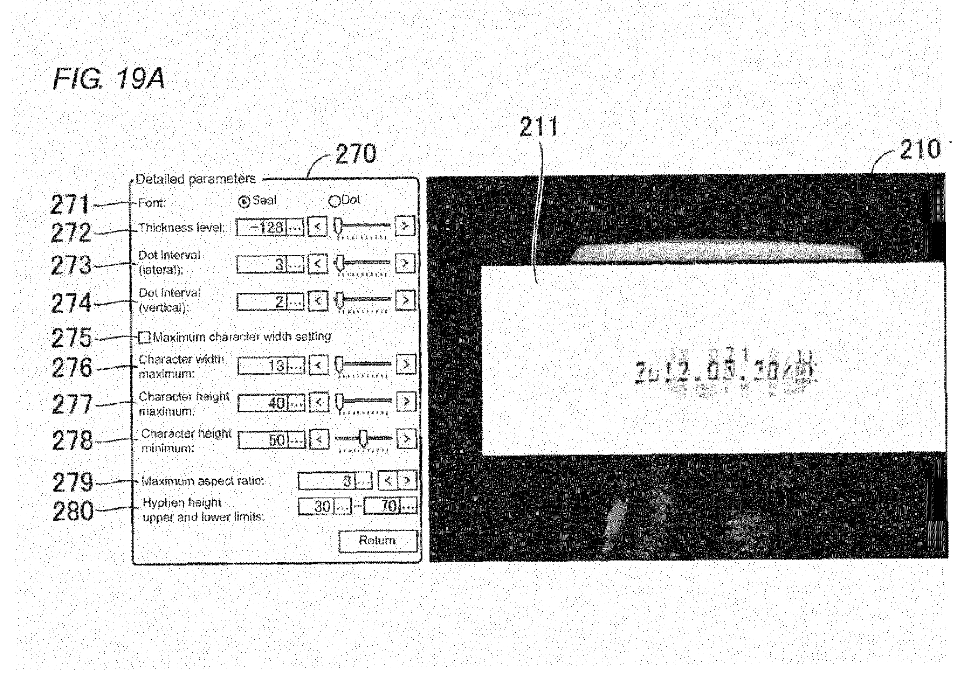

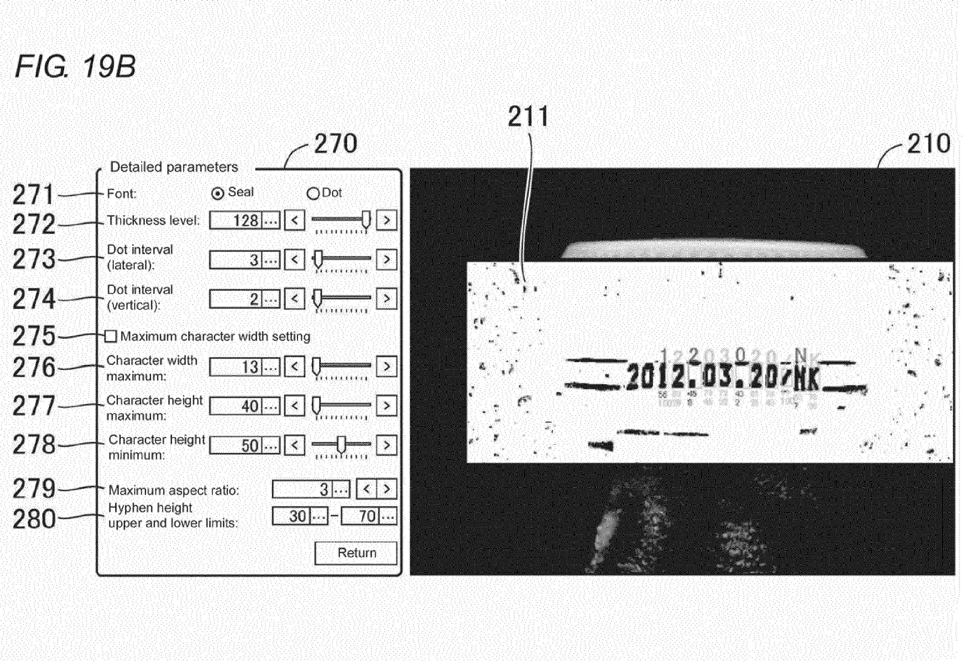

Figs. 19A and 19B show examples of a displayed content when a detailed parameter has been changed. Figs. 19A and 19B show an example that a value of a thickness level set in the input box 272 in Fig. 18 has been changed. A measurement parameter of "thickness level" is a measurement parameter linked to a threshold value for binarization, and the value can be set in the range of -128 to 128.

Fig. 19A shows an example that the thickness level is "-128", and Fig. 19B shows an example that the thickness level is "+128". By changing the threshold value for binarization in this manner, a result of character recognition processing varies. By visualizing the result of the character recognition processing while linking the result to the change of the measurement parameter, the user can easily decide whether the setting of the measurement parameter is valid.

The dot interval (lateral) and the dot interval (vertical) require adjustment in connecting black pixels in the lateral direction and the vertical direction into one character.

As shown in Fig. 18 and Figs. 19A and 19B, by presenting the content of the detailed parameter in a visualized state, the presentation helps the user in manually adjusting the measurement parameter or setting each measurement parameter.

### (h2: Setting assistance of measurement parameter)

In manually adjusting a measurement parameter, depending on the condition of the input image, it is difficult to decide in some cases which measurement parameter should be adjusted. As a function of the setting assistance of a measurement parameter, by comparing the recognized character and the value of each measurement parameter, it may be advised to the user about which measurement parameter is valid for adjustment.

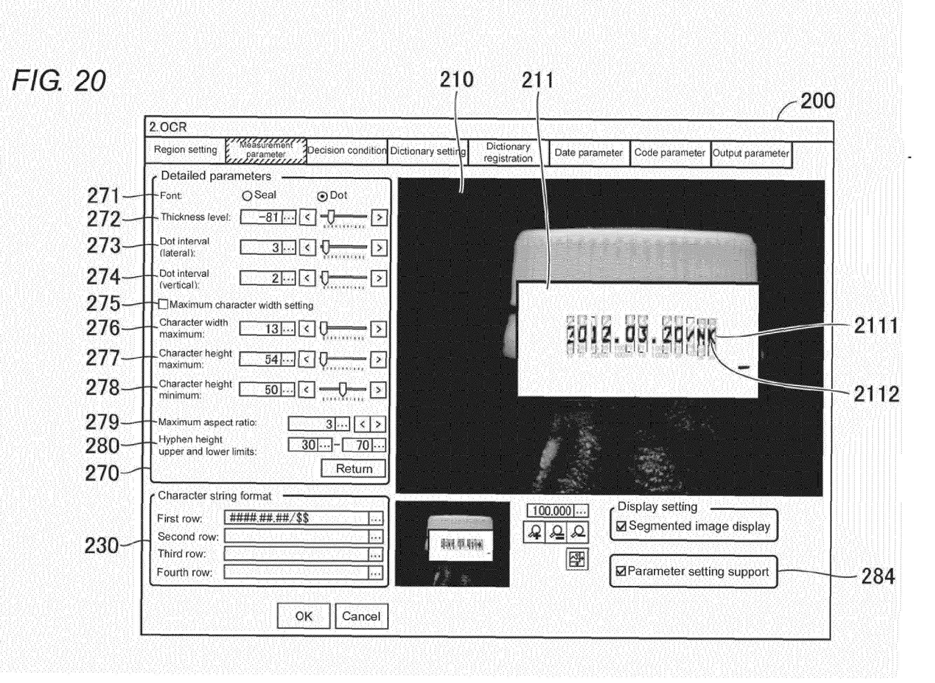

Fig. 20 shows an example of the operation display screen 200 in which a setting assistance function of measurement parameters has been installed. In the operation display screen 200 shown in Fig. 20, when a check box 284 of "parameter setting assistance" has been checked, the setting assistance function is validated. That is, the supporting function of manual adjustment of the measurement parameter by the user is triggered by checking the check box 284 of the "parameter setting assistance".

For example, by comparing the rectangle that surrounds each recognized character and the rectangle 2111 of which parameters are recognized that surrounds each measurement character as shown in Fig. 18 and Figs. 19A and 19B, the following support may be performed.

In the example shown in Fig. 20, the height of the set rectangle is too large for the height of the recognized actual character. Accordingly, a message "Please lower the parameter of "maximum character height" to the height of the actual character" may be advised to the user.

By detecting a condition that a character is broken or a character is too thick, it is possible to advise the user to adjust any measurement parameter out of "thickness level", "dot interval (lateral)", and "dot interval (vertical)". At the same time, it is preferable that, by holding a character that serves as the template, the broken portion or the too thick portion is displayed in colors, by matching the held character and the recognized character.

Further, an optimum value obtained by differentially varying a measurement parameter set at present may be displayed to the measurement parameter.

### (h3. Adjustment and visualization of character shape)

As described above, a measurement parameter can be optimized by teaching, and at the same time, a result of character recognition executed following the optimized measurement parameter can be display by visualization.

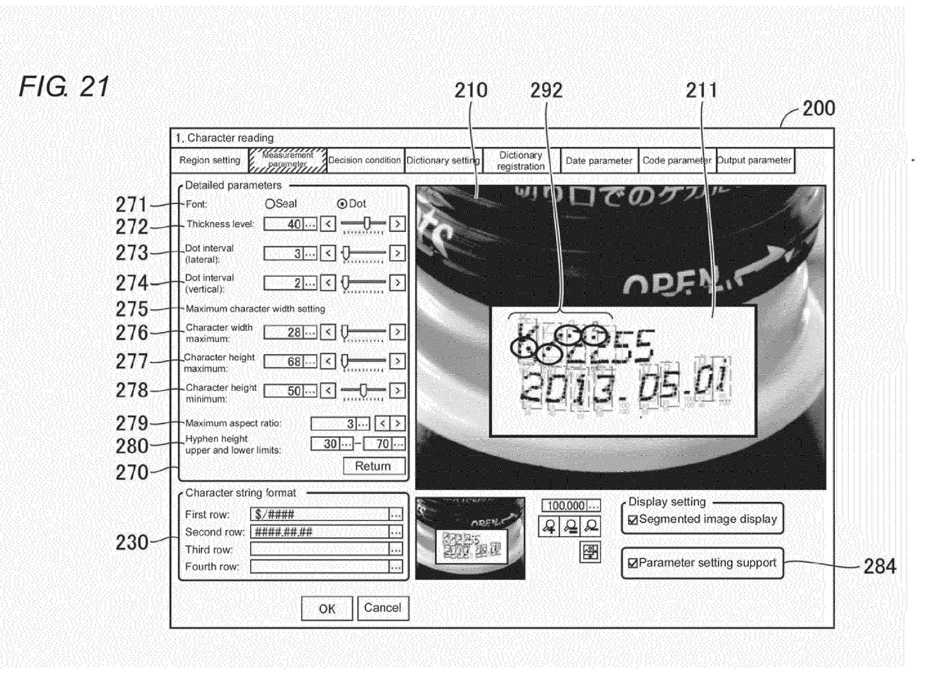

Fig. 21 shows an example of a recognition result. As shown in Fig. 21, for example, a result of character recognition is displayed by forming a character. On the other hand, when the image is looked at, there is a possibility that a measurement parameter can be determined as a more preferable value by connecting or dividing a portion a little more as a character. For example, a portion surrounded by a mark 292 in Fig. 21 corresponds to this case. As a supporting function in the case where the user manually adjusts the measurement parameter in a more preferable state, it is preferable to visualize a portion which it is decided better to be connected or divided as a character.

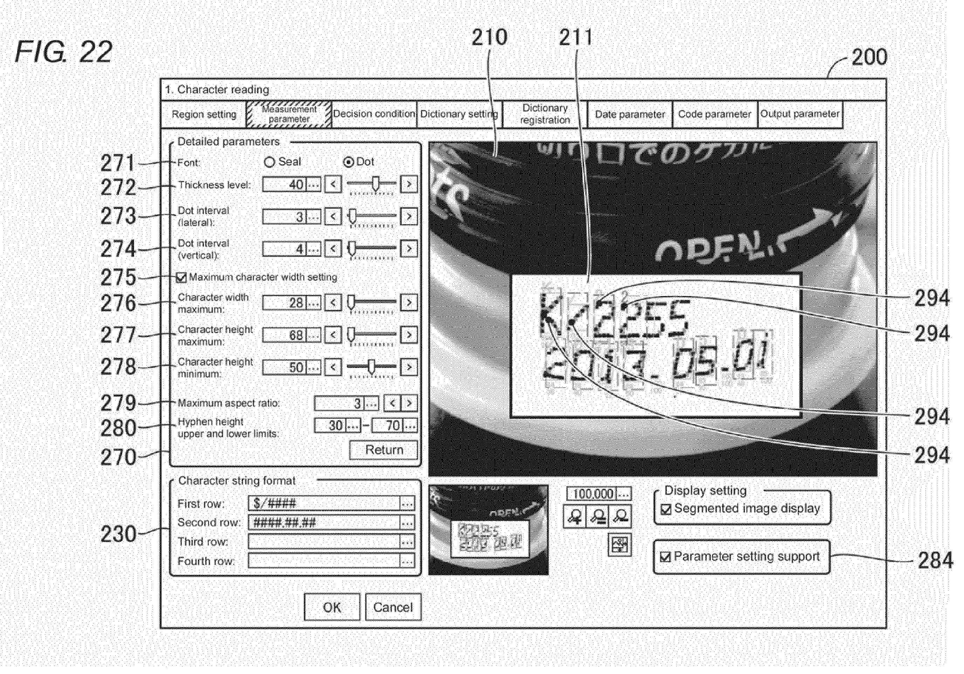

Fig. 22 shows an example that a portion which it is decided better to be connected or divided as a character is visualized. In the processing region 211 shown in Fig. 22, a portion in the broken state of a connection in the character is shown by a mark 294. By labeling each rectangle corresponding to each recognized character as a recognition result, a broken portion in the character has been detected. That is, by labeling each rectangle of an output result character, a portion that cannot be connected is displayed in color.

By the visualization, the user can grasp at a glance the portion which is decided better to be connected or divided as a character. That is, when a portion that should be connected as a character is divided, the display mode of this place is differentiated to call attention of the user. In contrast, when a portion that should be divided as a character is connected, the display mode of this place is differentiated to call attention of the user.

At the same time, for the connection in the character, there may be presented to the user about which measurement parameter should be adjusted. For example, in the example shown in Fig. 22, there may be output a message or voice of "Please increase the numerical value of the thickness level a little more". By using this supporting function, the character recognition processing can be more stabilized.

### <I. Functional block>

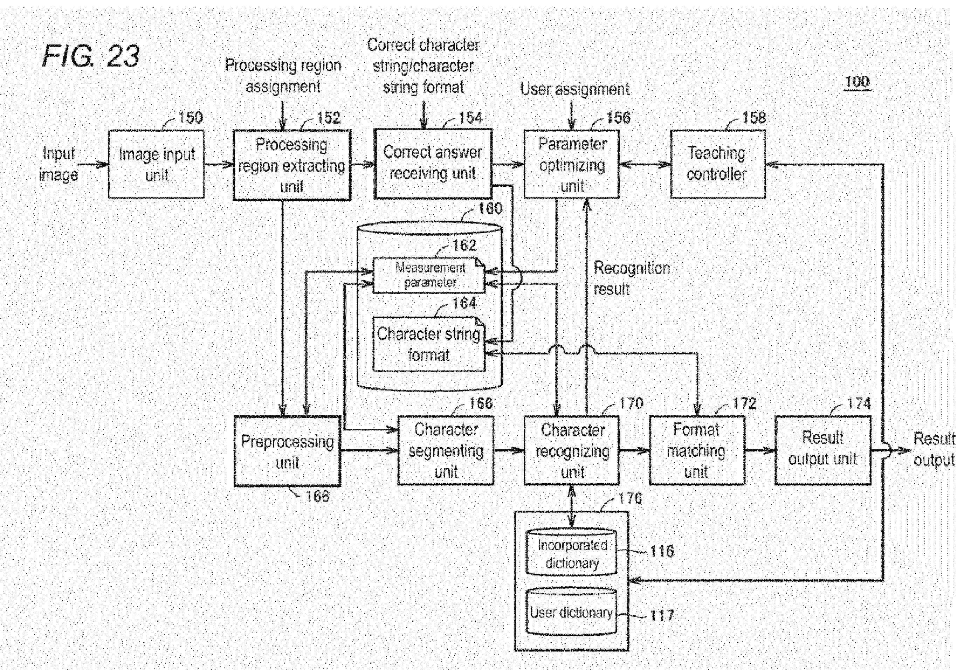

Fig. 23 is a schematic view of a functional configuration of the image processing device 100 according to the embodiment. Each module shown in Fig. 23 is realized by the processor 110 executing the image processing program 115 (both shown in Fig. 5).

In Fig. 23, as a functional configuration, the image processing device 100 includes an image input unit 150, a processing region extracting unit 152, a correct answer receiving unit 154, a parameter optimizing unit 156, a teaching controller 158, a preprocessing unit 166, a character segmenting unit 168, a character recognizing unit 170, a format matching unit 172, and a result output unit 174. The image processing device 100 also includes a variable storage unit 160 for storing a measurement parameter 162 and a character string format 164, and a dictionary storage unit 176 for storing the incorporated dictionary 116 and the user dictionary 117. Representatively, the variable storage unit 160 is provided by using at least part of the main memory 112 (Fig. 2) and the like of the image processing device 100. The dictionary storage unit 176 is provided by using at least part of the hard disk 114 (Fig. 2) and the like of the image processing device 100.

First, the operation of each unit of the ordinary recognition processing will be described.

The image input unit 150 receives the input image from the imaging unit 8 (Fig. 2) and the like. The processing region extracting unit 152 receives the assignment of the processing region from the user, and outputs to the preprocessing unit 166 a partial image corresponding to the processing region of the input image. The preprocessing unit 166 executes the preprocessing on the partial image from the processing region extracting unit 152, following the measurement parameter 162, and outputs the preprocessed image to the character segmenting unit 168. The character segmenting unit 168 specifies a region corresponding to each character included in the image from the preprocessing unit 166, following the measurement parameter 162.

The character recognizing unit 170 refers to the incorporated dictionary 116 and the user dictionary 117, and recognizes the character in each region specified by the character segmenting unit 168. That is, the character recognizing unit 170 corresponds to a matching processing unit that performs matching processing on the input image based on one or a plurality of preregistered templates.

The format matching unit 172 decides whether the character string recognized by the character recognizing unit 170 matches the preset character string format 164. When the character string recognized by the character recognizing unit 170 matches the preset character string format 164, the format matching unit 172 outputs the recognized character string to the result output unit 174. When the character string recognized by the character recognizing unit 170 does not match the preset character string format 164, the format matching unit 172 outputs reading NG to the result output unit 174. The result output unit 174 outputs an operation display screen including a result output, to the display 102, by using the output from the format matching unit 172.

Next, the operation of each unit in the adjustment processing will be described.

The image input unit 150 receives the input image that is used for the teaching.

The processing region extracting unit 152 receives the assignment of the processing region from the user. The correct answer receiving unit 154 receives the correct character string and the character string format from the user. In some cases, the correct answer receiving unit 154 receives only one of the correct character string and the character string format from the user. The character string format set by the user is stored as the character string format 164 of the variable storage unit 160. The parameter optimizing unit 156 optimizes the measurement parameter, following the processing described with reference to Fig. 17. The optimized measurement parameter is stored as the measurement parameter 162 of the variable storage unit 160. That is, the processing region extracting unit 152, the correct answer receiving unit 154, and the parameter optimizing unit 156 correspond to an interaction unit that outputs a result showing a range of each region extracted from the input image on the ground of the region matching any template, and that receives from the user an input about whether the extraction result of each region is proper.

The teaching controller 158 controls optimization of a measurement parameter by the parameter optimizing unit 156, and the processing of dictionary registration. That is, the teaching controller 158 corresponds to a controller that executes the optimization processing of a parameter to be used in the matching processing when there has been the input that the extraction result is not proper, and that executes the update processing of the template according to success or failure of the matching result of each extracted region when there has been the input that the extraction result is proper.

### <J. Other application>

In the above embodiment, the character recognition processing has been described as an example of the matching processing based on one or a plurality of preregistered templates. However, the matching processing can be also applied to pattern matching processing, not only to the character recognition processing.

For example, the matching processing can be applied to the pattern matching processing of, on the input image obtained by capturing images of a plurality of workpieces, specifying regions in which the workpieces exist and the number of workpieces. As the teaching in this case, a measurement parameter is optimized by using a template concerned, by using the number of workpieces that exist in the input image as a correct character string. When the measurement parameter can be optimized by the teaching, the result is used as a final result. When an optimum measurement parameter cannot be determined even after the teaching is repeated to the upper limit value, the user is guided to prepare the template again, capture an image of the input image again (or change the imaging condition), or manually adjust the measurement parameter.

As described above, it is self-evident that the basic technical idea relating to the present invention can be applied to various kinds of matching processing.

### <K. Conclusion>

According to the image processing device 100 of the embodiment, even the user having little experience and knowledge can perform adjustment to properly execute matching processing based on a registered template.

As a more detailed example, in the character reading test using the character recognition processing as described above, it is necessary to perform the initial setting (teaching) before the processing, and start the test by using the adjusted measurement parameter. During the operation of the character reading test, when reading NG has occurred in a certain workpiece, it is necessary to analyze the cause, and readjust the measurement parameter. The adjustment of the measurement parameter necessitates many man-hours. This is a large burden to the user having no or little experience. On the other hand, the image processing device 100 according to the embodiment automatically analyzes the cause of the reading NG having occurred during the execution of reading. The image processing device 100 guides the user to take a proper measure according to the cause, that is, a more proper measure out of re-teaching of the measurement parameter and dictionary registration.

Accordingly, because the user is informed of how to solve the inconvenience when reading NG has occurred during the execution of reading, the user can take necessary action without a worry, and can reduce man-hour relating to the adjustment and setting. Also, even when the user has little experience and knowledge, the user can perform proper adjustment and setting.

By introducing the supporting function, it becomes possible to improve operability of adjustment necessary for the character recognition processing, and decrease setting man-hour at the line structuring time.

Further, in the embodiment, for additionally implementing tuning, the result of already executed tuning is utilized. Therefore, a more proper measurement parameter can be determined. In the experiments by the inventors of the present invention, in the actual character reading test, by introducing the additional teaching according to the embodiment, the reading performance of 70% obtained by only the first teaching was improved to 90%.

For the user having little experience and knowledge, it is difficult to decide whether a measurement parameter is good for the actual processing, from only a numerical value of the measurement parameter. On the other hand, the image processing device according to the embodiment presents to the user a visualized state of the measurement parameter. Therefore, even when the user has little experience and knowledge, the user can grasp at a glance whether the measurement parameter is good and to which direction adjustment is to be made.

It should be considered that the embodiment disclosed herein is an exemplification in all aspects and is not restrictive. The range of the present invention is expressed in claims and not in the above description, and is intended to include all alterations in the meaning and the range equivalent to the claims.

## Claims

1. An image processing device (100) comprising:
a matching processing unit (170) configured to perform matching processing on an input image based on one or a plurality of preregistered templates;
an interaction unit (152, 154, 156) configured to output a result indicating a range of each region extracted from the input image assuming that the region matches one of the templates, and configured to receive from a user an input regarding whether an extraction result of each region is proper; and
a control unit (158) configured to execute optimization processing of a parameter to be used for the matching processing when receiving an input that the extraction result is not proper, and configured to execute update processing of the template according to success or failure of the matching result of each extracted region when receiving an input that the extraction result is proper.

2. The image processing device (100) according to claim 1, wherein the matching processing comprises processing of extracting a region for each character comprised in the input image and recognizing a character comprised in each region, based on a template registered for each character.

3. The image processing device (100) according to claim 2, wherein the control unit (158) is configured to receive a correct character string of a character comprised in the input image, and is configured to decide success or failure of the matching result by comparing a correct character string of the character and a recognition result of a character in each region.

4. The image processing device (100) according to claim 3, wherein the control unit (158) is configured to add as the template a partial image corresponding to a character which does not match a correct character string of the character out of a recognition result of the character.

5. The image processing device (100) according to claim 3 or 4, wherein the interaction unit (152, 154, 156) is configured to display a recognition result of the character in association with each extracted region, and is also configured to display a character that does not match a correct character string of the character out of a recognition result of the characters, in a mode different from that of a character which matches a correct character string of the character.

6. The image processing device (100) according to any one of claims 2 to 5, wherein the control unit (158) is configured to decide whether each extracted region is adapted to a preset character string format, and is configured to, when each extracted region is not adapted to the character string format, execute optimization processing of a parameter to be used in the matching processing, without waiting for input from a user through the interaction unit (152, 154, 156).

7. The image processing device (100) according to any one of claims 1 to 6, wherein the control unit (158) is configured to, when receiving an input that the extraction result is not proper, optimize again a parameter by utilizing a result of precedingly executed optimization processing of the parameter.

8. The image processing device (100) according to claim 7, wherein the control unit (158) is configured to, when a proper extraction result is not obtained even after optimization processing of a parameter is repeated to a predetermined upper limit value, urge a user to perform at least one of manual adjustment of the parameter and change of the input image.

9. The image processing device (100) according to any one of claims 1 to 8, wherein the matching processing unit (170) is configured to calculate similarity as a matching degree between a partial image comprised in each extracted region and the one or the plurality of templates, and
the interaction unit (152, 154, 156) is configured to output a value of highest similarity of each extracted region, by associating the value with each region.

10. The image processing device (100) according to claim 9, wherein the interaction unit (152, 154, 156) is configured to output a value of stability as a difference between a value of highest similarity and a value of next high similarity of each extracted region, by associating the value of stability with each region.

11. The image processing device (100) according to any one of claims 1 to 10, wherein the interaction unit (152, 154, 156) is configured to display a frame (214) indicating a range of each extracted region, in superposition with the input image.

12. An image processing method comprising:
a step of performing matching processing on an input image based on one or a plurality of preregistered templates;
a step of outputting a result indicating a range of each region extracted from the input image assuming that the region matches one of the templates, and receiving from a user an input regarding whether an extraction result of each region is proper; and
a step of executing optimization processing of a parameter to be used for the matching processing when receiving an input that the extraction result is not proper, and executing update processing of the template according to success or failure of the matching result of each extracted region when receiving an input that the extraction result is proper.

13. An image processing program (115) configured to cause a computer to execute:
a step of performing matching processing on an input image based on one or a plurality of preregistered templates;
a step of outputting a result indicating a range of each region extracted from the input image assuming that the region matches one of the templates, and receiving from a user an input regarding whether an extraction result of each region is proper; and
a step of executing optimization processing of a parameter to be used for the matching processing when receiving an input that the extraction result is not proper, and executing update processing of the template according to success or failure of the matching result of each extracted region when receiving an input that the extraction result is proper.

14. An image processing device (100) comprising:
a matching processing unit (170) configured to perform matching processing on an input image based on a preregistered template;
an interaction unit (152, 154, 156) configured to indicate a region extracted from the input image assuming that the region matches the template and configured to receive an input regarding whether the region is proper; and
a control unit (158) configured to execute optimization processing of a parameter to be used for the matching processing when receiving an input that the region is not proper, and configured to execute update processing of the template when receiving an input that the region is proper.
